(19) Europäisches Patentamt
European Patent Office
Office européen des brevets

(11) EP 2 268 764 B1

(12) EUROPÄISCHE PATENTSCHRIFT

(45) Veröffentlichungstag und Bekanntmachung des Hinweises auf die Patenterteilung:
**12.03.2014 Patentblatt 2014/11**

(21) Anmeldenummer: **09734065.7**

(22) Anmeldetag: **14.04.2009**

(51) Int Cl.:
***C09K 8/584*** (2006.01) ***B01F 17/00*** (2006.01)

(86) Internationale Anmeldenummer:
**PCT/EP2009/054380**

(87) Internationale Veröffentlichungsnummer:
**WO 2009/130141 (29.10.2009 Gazette 2009/44)**

(54) **VERWENDUNG VON TENSIDMISCHUNGEN FÜR DIE TERTIÄRE ERDÖLFÖRDERUNG**

USE OF TENSIDE MIXTURES FOR TERTIARY OIL PRODUCTION

UTILISATION DE MÉLANGES TENSIOACTIFS POUR LA RÉCUPÉRATION TERTIAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **21.04.2008 EP 08154862**

(43) Veröffentlichungstag der Anmeldung:
**05.01.2011 Patentblatt 2011/01**

(73) Patentinhaber: **BASF SE**
**67056 Ludwigshafen (DE)**

(72) Erfinder:
- **STEINBRENNER, Ulrich**
  **67435 Neustadt (DE)**
- **BITTNER, Christian**
  **64625 Bensheim (DE)**
- **OETTER, Günter**
  **67227 Frankenthal (DE)**
- **GUZMANN, Marcus**
  **69242 Mühlhausen (DE)**

(56) Entgegenhaltungen:
**WO-A-2008/012242**
**US-A- 3 811 505**
**US-A- 4 468 335**
**US-A- 4 468 342**
**US-A1- 2004 177 958**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft die Verwendung einer Tensidmischung umfassend mindestens ein Tensid mit einem Kohlenwasserstoffrest aus 12 bis 30 C-Atomen sowie mindestens einem Cotensid mit einem verzweigten Kohlenwasserstoffrest aus 6 bis 11 C-Atomen für die tertiäre Erdölförderung.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 $\mu$m aufweisen. Neben Erdöl, inklusive Anteilen von Erdgas enthält eine Lagerstätte mehr oder weniger stark salzhaltiges Wasser. Der Salzgehalt von Lagerstättenwasser beträgt nicht selten 5 bis 20 Gew. %; es gibt aber auch Lagerstätten mit einem Salzgehalt von bis zu 27 Gew. %. Bei den gelösten Salzen kann es sich beispielsweise um Alkalimetallsalze handeln, in manchen Lagerstätten enthält das Lagerstättenwasser aber auch über relative hohe Anteile an Erdalkaliionen, beispielsweise bis zu 5 Gew. % Calciumionen und/oder Magnesiumionen.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche. Der Eigendruck kann durch in der Lagerstätte vorhandene Gase wie Methan, Ethan oder Propan hervorgerufen werden. Mittels der primären Förderung lassen sich je nach Lagerstättentyp aber meist nur ca. 5 bis 10% der in der Lagerstätte vorhandenen Erdölmenge fördern, danach reicht der Eigendruck nicht mehr zur Förderung.

Nach der primären Förderung kommt daher die sekundäre Förderung zum Einsatz. Bei der sekundären Förderung werden zusätzlich zu den Bohrlöchern, welche der Förderung des Erdöls dienen, den so genannten Produktionsbohrungen, weitere Bohrlöcher in die erdölführende Formation gebohrt. Durch diese so genannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird (siehe Abbildung 1). Sobald das dünnflüssige Wasser durch Hohlräume durchbricht, strömt es ab diesem Zeitpunkt auf dem Weg des geringsten Widerstandes, also durch den gebildeten Kanal und schiebt nicht mehr das Öl vor sich her. Diese Situation ist in Abbildung 2 dargestellt: Aufgrund der unterschiedlichen Polarität von Öl und Wasser ergibt sich zwischen beiden Komponenten eine hohe Grenzflächenenergie bzw. Grenzflächenspannung. Daher nehmen beide zueinander die kleinste Kontaktfläche ein, was in einem kugelförmigen Öltropfen resultiert, welcher nicht mehr durch die feinen Kapillaren passt. Am Ende des Wasserflutens ist das Öl also in diskontinuierlicher Form (vereinzelte Kugeltropfen) in den Kapillaren gefangen.

Mittels primärer und sekundärer Förderung sind im Regelfalle nur ca. 30 bis 35 % der in der Lagerstätte vorhandenen Erdölmenge zu fördern.

Es ist bekannt, die Erdölausbeute durch Maßnahmen der tertiären Ölförderung weiter zu steigern. Eine Übersicht zur tertiären Ölförderung findet sich beispielsweise im Journal of Petroleum Science and Engineering 19 (1998) 265-280. Zur tertiären Ölförderung gehören Wärmeverfahren, bei denen Heißwasser oder Heißdampf in die Lagerstätte eingepresst wird. Hierdurch wird die Viskosität des Öls herabgesetzt. Als Flutmedium können auch Gase wie $CO_2$ oder Stickstoff Einsatz finden.

Zur tertiären Erdölförderung gehören weiterhin Verfahren, bei denen man geeignete Chemikalien als Hilfsmittel zur Ölförderung einsetzt. Mit diesen lässt sich die Situation gegen Ende des Wasserflutens beeinflussen und dadurch auch bis dahin in der Gesteinformation festgehaltenes Erdöl fördern.

Auf das Erdöl, welches gegen Ende der sekundären Förderung in den Poren des Lagerstättengesteins gefangen ist, wirken viskose und kapillare Kräfte, wobei das Verhältnis dieser beiden Kräfte zueinander die mikroskopische Ölentfernung bestimmt. Mittels eines dimensionslosen Parameters, der so genannten Kapillarzahl, wird das Einwirken dieser Kräfte beschrieben. Sie ist das Verhältnis der Viskositätskräfte (Geschwindigkeit x Viskosität der drückenden Phase) zu den Kapillarkräften (Grenzflächenspannung zwischen Öl und Wasser x Benetzung des Gesteins):

$$N_c = \frac{\mu\nu}{\sigma\cos\theta}.$$

Dabei bedeutet $\mu$ die Viskosität des Erdöl mobilisierenden Fluids, $\nu$ die Darcy-Geschwindigkeit (Durchfluss pro Flächeneinheit), $\sigma$ die Grenzflächenspannung zwischen Erdöl mobilisierender Flüssigkeit und Erdöl und $\theta$ der Kontaktwinkel zwischen Erdöl und dem Gestein (C. Melrose, C.F. Brandner, J. Canadian Petr. Techn. 58, Oct. - Dez., 1974). Je höher die Kapillarzahl, desto größer die Mobilisierung des Öls und somit auch der Entölungsgrad.

Es ist bekannt, dass die Kapillaritätszahl gegen Ende der sekundären Erdölförderung im Bereich von etwa $10^{-6}$ liegt und dass es notwendig ist, die Kapillaritätszahl auf etwa $10^{-3}$ bis $10^{-2}$ zu erhöhen, um zusätzliches Erdöl mobilisieren zu können.

Hierzu kann man beispielsweise die Grenzflächenspannung $\sigma$ zwischen Erdöl und wässriger Phase durch den Zusatz von geeigneten Tensiden absenken. Diese Technik ist auch als "Tensidfluten" bekannt. Hierzu eignen sich insbesondere Tenside, welche $\sigma$ auf Werte von < $10^{-2}$ mN/m (ultralow interfacial tension) herabsetzen können. Auf diese Art und Weise lassen sich die Öltröpfchen in ihrer Form verändern und durch das Flutwasser durch die Kapillaröffnungen hindurchzwängen.

Es ist erwünscht, dass die Öltröpfchen sich anschließend zu einer kontinuierlichen Ölbank zu vereinen. Dies ist schematisch in Abbildung 3 gezeigt. Dies hat zweierlei Vorteile: Zum einen können beim Voranschreiten der kontinuierlichen Ölbank durch neues poröses Gestein, die sich dort befindlichen Öltropfen mit der Bank verschmelzen. Weiterhin wird durch die Vereinigung der Öltropfen zu einer Ölbank die Öl-Wasser-Grenzfläche deutlich verringert und somit nicht mehr benötigtes Tensid freigesetzt. Das freigesetzte Tensid kann danach in der Formation verbliebene Öltropfen mobilisieren. Dies ist schematisch in Abbildung 4 gezeigt. Auch zur Vereinigung der Öltropfen zu einer Ölbank sowie zur Aufnahme neuer Öltropfen in die Ölbank ist eine ultraniedrige Grenzflächenspannung zwischen der Wasser- und der Ölphase erforderlich. Ansonsten bleiben einzelne Öltropfen zurück oder werden nicht in die Ölbank mit aufgenommen. Dies schmälert die Effizienz des Tensidflutens.

Im Allgemeinen wird nach dem Tensidfluten zur Aufrechterhaltung des Drucks nicht Wasser in die Formation injiziert, sondern eine höherviskose, wässrige Lösung eines stark verdickend wirkenden Polymers. Diese Technik ist als "Polymerfluten" bekannt.

Beim Tensidfluten sollen die Tenside mit der Wasser- und der Ölphase eine Mikroemulsion (Winsor Typ III) bilden. Bei einer Mikroemulsion (Winsor Typ III) handelt es sich nicht um eine Emulsion mit besonders kleinen Tröpfchen, sondern um eine thermodynamisch stabile, flüssige Mischung von Wasser, Öl und Tensiden, welche eine sehr niedrige Grenzflächenspannung aufweist und meist über eine niedrige Viskosität verfügt. Sie steht mit überschüssigem Wasser und überschüssigem Öl im Gleichgewicht. Eine niedrige Viskosität ist wünschenswert zum Transport der Emulsion in der Erdölformation. Bei einer zu hohen Viskosität der zu transportierenden Phase müsste im Zuge des Polymerflutens ein sehr hoher Druck aufgewandt werden. Dies ist einerseits teuer, vor allem besteht aber auch die Gefahr, dass durch den Druck unerwünschterweise neue Hohlräume in die Erdölformation gesprengt werden. Desweiteren wird eine Vereinigung der mobilisierten Öltröpfchen zu einer kontinuierlichen Ölbank im Falle zu hoher Viskositäten behindert.

Eine wichtige technische Anforderung an das Tensidfluten ist es, dass die Phasentrennung und die Ausbildung der Mikroemulsion (Winsor Typ III) möglichst schnell erfolgen soll. Da die Tensidflut relativ lange in der Erdölformation verbleibt, erscheint diese Anforderung auf den ersten Blick überflüssig zu sein. Dies ist aber nicht der Fall. Die Tensidflut ist nämlich bei ihrer Passage durch die Erdölformation ständig starken Scherkräften ausgesetzt, beispielsweise beim Passieren von engen Kapillaren. Diese Scherkräfte können wieder eine Vermischung der drei Phasen bewirken oder zumindest die Phasentrennung stark verzögern. Es ist daher wichtig, eine Tensidflut einzusetzen, welche den Vermischungstendenzen entgegenwirken kann und bei der sich die Mikroemulsion (Winsor Typ III) immer wieder schnell ausbilden kann.

Es hat sich empirisch gezeigt, dass die Trennzeiten häufig umso länger sind, je besser die eingesetzten Tenside die Grenzflächenspannung erniedrigen. Es besteht daher nach wie vor Bedarf, Tensidsysteme zu finden, welche einerseits eine sehr starke Erniedrigung der Grenzflächenspannung bewirken können, und welche andererseits auch eine möglichst niedrige Trennzeit aufweisen.

Tensidmischungen für die tertiäre Erdölförderung sind prinzipiell bekannt.

US 3,811,504 offenbart eine Mischung aus 2 verschiedenen anionischen Tensiden und einem nichtionischen Tensid zum Einsatz in Lagerstätten, deren Lagerstättenwasser 0,15 bis 1,2 % Calcium- und Magnesiumionen enthält. Bei dem ersten anionischen Tensid handelt es sich um Alkylsulfonate mit 5 bis 25 C-Atomen oder Alkylarylsulfonate, deren Alkylrest 5 bis 25 C-Atome aufweist, bei dem zweiten um Alkylpolyethoxysulfate, deren Alkylrest 7 bis 20 Kohlenstoffatome aufweist und bei dem nichtionischen Tensid um ethoxylierte Alkylphenole, deren Alkylrest 6 bis 20 C-Atome aufweist oder um aliphatische Alkohole mit 5 bis 20 C-Atomen.

US 3,811,505 offenbart eine Mischung aus einem anionischen und einem nichtionischen Tensid zum Einsatz in Lagerstätten, deren Lagerstättenwasser 0,5 bis 0,9 Gew. % mehrwertige Ionen enthält. Bei den anionischen Tensiden handelt es sich um Alkylsulfonate oder Alkylphosphate mit jeweils 5 bis 25 C-Atomen, Alkylarylsulfonate oder Alkylarylphosphonate, deren Alkylrest jeweils 5 bis 25 C-Atome aufweist. Bei den nichtionischen Tensiden handelt es sich um polyethoxylierte Alkylphenole, welche 6 bis 20 Ethoxygruppen aufweisen und deren Alkylrest 5 bis 20 C-Atome aufweist oder um polyethoxylierte aliphatische Alkohole mit 6 bis 20 C-Atomen und 6 bis 20 Ethoxygruppen.

US 3,811,507 offenbart eine Mischung aus zwei verschiedenen anionischen Tensiden zum Einsatz in Lagerstätten, deren Lagerstättenwasser 0,3 bis 1,8 Gew. % Ca- und Mg-Ionen enthält. Bei dem ersten anionischen Tensid handelt es sich um Alkylsulfonate mit 5 bis 25 C-Atomen oder Alkylarylsulfonate, deren Alkylrest jeweils 5 bis 25 C-Atome aufweist. Bei dem zweiten anionischen Tensid handelt es sich um Alkylpolyethoxysulfate, welche 1 bis 10 Ethoxygruppen aufweisen und deren Alkylrest 7 bis 20 C-Atome aufweist.

US 3,890,239 offenbart eine Tensidmischung für die Erdölförderung, welche ein organisches Sulfonat, vorzugsweise mit 12 bis 30 C-Atomen, einen Polyalkylenglykolalkylether sowie einen sulfonierten oder sulfatierten, oxalkylierten Alkohol umfasst. Beim dem zuletzt genannten kann es sich beispielsweise um aliphatische Alkohole mit 8 bis 20 C-Atomen oder um Alkylphenole mit einem Alkylrest mit 5 bis 20 C-Atomen handeln.

US 4,463,806 offenbart eine Mischung zum Tensidfluten, welche als Tenside ein Petroleumsulfonat sowie ein Alkylethersulfonat mit 8 bis 22 C-Atomen oder ein Alkylarylethersulfonat mit einem 5 bis 24 C-Atome aufweisenden Alkylrest umfasst.

US 2006/0185845 A1 offenbart die Verwendung einer Mischung aus mindestens einem aliphatischen anionischen Tensid und einem verzweigten aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5.

US 2006/018486 offenbart die Verwendung einer Mischung aus mindestens einem verzweigten aliphatischen anionischen Tensid und einem aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5

Keine der zitierten Schriften diskutiert die Problematik der Trenngeschwindigkeit.

D. B. Levitt, A. C. Jackson, L. Britton und G.A. Pope, "Identification and Evaluation of High-Performance EOR Surfactants," SPE 100089, Konferenzbeitrag für das SPE Symposium on Improved Oil Recovery Annual Meeting, Tulsa, OK, April 24-26, 2006. beschreiben die Verwendung von Sulfonaten basierend auf Hydrophobteilen von $C_{13}$ bis $C_{24}$, sowie die Verwendung kurzer verzweigter Alkohole wie z.B. sec- Butanol und Isopropanol als Cosolventien zur Beschleunigung der Phasentrennung. Die Verwendung von $C_6$- bis $C_{11}$- Alkoholalkoxylaten als Cotenside wird nicht offenbart.

Aufgabe der Erfindung war es, ein Tensidsystem für die tertiäre Erdölförderung zu finden, welches einerseits eine sehr starke Erniedrigung der Grenzflächenspannung bewirkt, und welches andererseits auch eine möglichst niedrige Trennzeit aufweist.

Dementsprechend wurde die Verwendung einer Tensidmischung für die tertiäre Erdölförderung gefunden, bei der man eine wässrige Tensidformulierung durch mindestens eine Injektionsbohrung in eine Erdöllagerstätte einpresst und der Lagerstätte durch mindestens eine Produktionsbohrung Rohöl entnimmt, wobei die Tensidmischung mindestens die folgenden Tenside umfasst:

(A) 1 bis 99 Gew. % mindestens eines Tensids (A) der allgemeinen Formel $R^1$-X, wobei es sich bei $R^1$ um einen Kohlenwasserstoffrest mit 12 bis 30 C-Atomen und bei X um eine hydrophile Gruppe handelt, sowie

(B) 1 bis 90 Gew. % mindestens eines Cotensids (B),

und wobei die Mengenangaben jeweils auf die Gesamtmenge aller Tenside in der Mischung bezogen sind, dadurch gekennzeichnet, dass das Cotensid (B) die allgemeine Formel $R^2$-O-($R^3$-O)$_n$-$R^4$ (I) aufweist, und wobei die Reste $R^2$, $R^3$ und $R^4$ sowie die Zahl n die folgende Bedeutung haben:

n eine Zahl von 2 bis 20,

$R^2$ ein verzweigter Kohlenwasserstoffrest mit 6 bis 11 Kohlenstoffatomen, welcher einen durchschnittlichen Verzweigungsgrad von 1 bis 2,5 aufweist, ausgewählt aus der Gruppe von

$R^{2a}$ gesättigten, aliphatischen Kohlenwasserstoffresten, oder

$R^{2b}$ Phenyl- oder $R^6$-Phenyl-, wobei es sich bei $R^6$ um einen Alkylrest mit 1 bis 5 Kohlenstoffatomen handelt,

$R^{2c}$ phenylsubstituierte Kohlenwasserstoffreste der allgemeinen Formel Phenyl-$R^7$-, wobei es sich bei $R^7$ um einen zweiwertigen Kohlenwasserstoffrest mit 1 bis 5 Kohlenstoffatomen handelt,

$R^3$ unabhängig voneinander eine Ethylen- oder eine Propylengruppe, mit der Maßgabe, dass die Ethylen- und Propylengruppen -sofern beide Arten von Gruppen vorhanden sind- statistisch, alternierend oder in Blockstruktur angeordnet sein können,

$R^4$ Wasserstoff oder eine Gruppe ausgewählt aus der Gruppe von $-SO_3H$, $-PO_3H_2$,-$R^5$-COOH, -$R^5$-$SO_3H$ oder -$R^5$-$PO_3H_2$ oder Salzen davon, wobei es sich bei $R^5$ um eine zweiwertige Kohlenwasserstoffgruppe mit 1 bis 4 Kohlenstoffatomen handelt,

mit der Maßgabe, dass die Menge von Tensiden (A) und Cotensiden (B) zusammen mindestens 25 Gew. % bezüglich

der Menge aller Tenside in der Mischung beträgt.

In einer bevorzugten Ausführungsform der Erfindung handelt es sich um eine Mischung, die 50 bis 99 Gew. % des Tensids (A) sowie 1 bis 50 Gew. % des Cotensids (B) umfasst.

Überraschenderweise wurde gefunden, dass unter Verwendung dieser Tensidmischung eine besonders schnelle Phasentrennung erreicht wird.

Beigefügte Abbildungen:

Abb. 1 Situation zu Beginn der sekundären Ölförderung: Vollständig mit Öl gefüllte Gesteinspore.

Abb. 2 Situation gegen Ende der sekundären Ölförderung: Das Flutwasser hat einen Kanal gebildet und strömt durch den Kanal, ohne weiteres Öl mitzunehmen.

Abb. 3 Schematische Darstellung des Tensidflutens in einer Erdölformation: Aus den Gesteinsporen freigesetzte Öltröpfchen vor (3a) und nach (3b) der Vereinigung zu einer kontinuierlichen Ölbank.

Abb. 4 Schematische Darstellung des Voranschreitens der kontinuierlichen Ölbank in der Erdölformation. Die Ölbank nimmt in Stromrichtung neue Öltröpfchen auf. Entgegen der Stromrichtung wird Tensid freigesetzt.

Zu der Erfindung ist im Einzelnen das Folgende auszuführen:

Die erfindungsgemäß verwendete Mischung umfasst 1 bis 99 Gew. % mindestens eines Tensids (A) und 1 bis 90 Gew. % mindestens eines Cotensids (B). Selbstverständlich können auch mehrere verschiedene Tenside (A) und/oder mehrere verschiedene Tenside (B) eingesetzt werden. Optional können darüber hinaus noch weitere, von den Tensiden (A) und den Cotensiden (B) verschiedene Cotenside (C) eingesetzt werden.

<u>Tenside (A)</u>

Die Tenside (A) weisen die allgemeine Formel $R^1$-X auf. Hierbei handelt es sich bei $R^1$ um einen gesättigten, ungesättigten und/oder aromatischen, linearen oder verzweigten, Kohlenwasserstoffrest mit 12 bis 30, bevorzugt 14 bis 22, besonders bevorzugt 16 bis 20 und ganz besonders bevorzugt 16 bis 18 Kohlenstoffatomen. Bevorzugt handelt es sich um einen verzweigten Kohlenwasserstoffrest.

Bei X handelt es sich um eine hydrophile Gruppe, welche dem Molekül amphiphile Eigenschaften verleiht. Es kann sich prinzipiell um beliebige hydrophile Gruppen handeln, welche zum Einsatz als Kopfgruppen in Tensiden geeignet sind. Dem Fachmann sind entsprechende hydrophile Gruppen bekannt. Geeignete hydrophile Gruppen X umfassen anionische, nichtionische, kationische oder betainische Gruppen. Bevorzugt handelt es sich um anionische oder nichtionische Gruppen. Beispiele bevorzugter Gruppen X umfassen Sulfonatgruppen, Sulfatgruppen, Polyoxyalkylengruppen, anionisch modifizierte Polyoxyalkylengruppen, Glucosidgruppen oder Aminoxidgruppen.

Besonders bevorzugt sind Tenside, welche Sulfonsäuregruppen aufweisen, sowie weiterhin Tenside mit Polyoxyalkylengruppen oder anionisch modifizierten Polyoxyalkylengruppen. Anionisch modifizierten Polyoxyalkylengruppen weisen bevorzugt terminale Sulfonat-, terminale Carboxylat- oder terminale Sulfatgruppen, besonders bevorzugt terminale Sulfonatgruppen auf. Saure Gruppen können selbstverständlich auch in Form ihrer Salze eingesetzt werden. Die Polyoxyalkylengruppen können 1 bis 50 Oxyalkylengruppen, bevorzugt 1 bis 40 umfassen, bevorzugt Ethoxygruppen und/oder Propoxygruppen. Daneben können aber auch noch höhere Alkylenoxygruppen vorhanden sein. Bevorzugt handelt es sich bei mindestens 50 % der vorhandenen Oxyalkylengruppen um Ethoxygruppen.

In einer besonders bevorzugten Ausführungsform der Erfindung handelt es sich bei den Tensiden (A) um organische Sulfonate wie z.B. Alkylbenzolsulfonate, Olefinsulfonate oder Parraffinsulfonate. Ganz besonders bevorzugt sind Olefinsulfonate. Olefinsulfonate umfassen eine ethylenisch ungesättigte Gruppe sowie eine Sulfonsäuregruppe und können durch Umsetzung von geeigneten Olefinen mit $SO_3$ hergestellt werden. Technisch hergestellte Olefinsulfonate enthalten herstellungsbedingt häufig zusätzlich Hydroxyalkylsulfonate. Insbesondere können Olefinsulfonate eingesetzt werden, deren Kohlenwasserstoffrest 14 bis 28 Kohlenstoffatome umfasst. Bevorzugt handelt es sich um verzweigte Kohlenwasserstoffreste. Beispielsweise können iso-$C_{16}$-Olefinsulfonate eingesetzt werden.

Dem Fachmann sind geeignete Tenside $R^1$-X für die tertiäre Erdölförderung sowie Herstellmethoden für derartige Tenside bekannt. Entsprechende Tenside sind auch kommerziell erhältlich.

<u>Cotenside (B)</u>

Erfindungsgemäß werden die Tenside (A) im Gemisch mit mindestens einem Cotensid (B), welches die allgemeine Formel $R^2\text{-O-}(R^3\text{-O})_n\text{-}R^4$ (I) aufweist, eingesetzt.

In Formel (I) steht $R^2$ für einen verzweigten aliphatischen und/oder aromatischen Kohlenwasserstoffrest mit 6

bis 11 Kohlenstoffatomen, welcher einen durchschnittlichen Verzweigungsgrad von 1 bis 2,5, bevorzugt 1 bis 1,5 aufweist.

Unter dem Begriff "Verzweigungsgrad" wird hierbei die mittlere Zahl der Kohlenstoffatome im Rest $R^2$ verstanden, die an drei weitere Atome außer Wasserstoff gebunden sind plus zweimal der Zahl der Kohlenstoffatome, die an vier weitere Atome außer Wasserstoff gebunden sind. Das mit der $-O-(R^3-O)_n-R^4$-Gruppe verknüpfte C-Atom wird hierbei mitgezählt. Die Begriffe "durchschnittlicher Verzweigungsgrad" sowie "mittlere Zahl von Kohlenstoffatomen" beziehen sich darauf, dass zur Synthese der erfindungsgemäß verwendeten Cotenside (B) nicht nur isomerenreine Alkohole eingesetzt werden können, sondern auch typische technische Alkoholgemische, welche eine gewisse Verteilung von verschiedenen Alkoholen sowie insbesondere verschiedene Isomere umfassen können.

Entsprechend der Definition weist beispielsweise ein n-Alkylrest, welcher in 1-Stellung mit der $-O-(R^3-O)_n-R^4$-Gruppe verknüpft ist, einen Verzweigungsgrad von 0 auf und gehört nicht zum Umfange dieser Erfindung, während ein n-Alkylrest, welcher über eines der nicht nicht terminalen C-Atome verknüpft ist, einen Verzweigungsgrad von 1 aufweist. Eine Phenylgruppe weist einen Verzweigungsgrad von 1 auf und eine einfach alkylsubstituierte Phenylgruppe einen Verzweigungsgrad von 2.

Die Reste $R^2$ werden ausgewählt aus der Gruppe von $R^{2a}$, $R^{2b}$ oder $R^{2c}$, bevorzugt $R^{2a}$ und $R^{2b}$ und besonders bevorzugt $R^{2a}$.

Bei $R^{2a}$ handelt es sich um verzweigte, gesättigte, aliphatische Kohlenwasserstoffreste mit 6 bis 11 Kohlenstoffatomen. Hiermit ist jeweils die mittlere Anzahl von Kohlenstoffatomen gemeint. Bevorzugt handelt es sich um Reste, welche im Mittel 8 bis 10, besonders bevorzugt 9,5 bis 10,5 Kohlenstoffatome aufweisen. Der Verzweigungsgrad der Reste $R^{2a}$ beträgt bevorzugt 1 bis 1,5.

Beispiele geeigneter Reste für $R^{2a}$ umfassen 2-Methyl-1-pentyl-, 2-Ethyl-1-hexyl-, 2-Propyl-1-heptyl-, 5-Methyl-2-Propyl-1-hexyl- , 4-Methyl-2-propyl-1-hexyl, 3-Methyl-2-propyl-1-hexyl, 2-Ethyl-4-methyl-1-pentyl und 2-Ethyl-3-methyl-1-pentylreste.

Weitere Beispiele bevorzugter Reste $R^{2a}$ umfassen insbesondere Reste die sich von technischen Alkoholen ableiten, insbesondere Oxoalkoholen und Guerbet-Alkoholen, besonders bevorzugt C10-Oxoalkoholen und C10-Guerbet-Alkoholen.

Die Begriffe "Oxo-Alkohol" bzw. Guerbet-Alkohol" sind dem Fachmann bekannt. Beispielhaft sei auf "Alcohols, Aliphatic", Seite 5 bzw. Seite 10 in Ullmann's Encyclopedia of Industrial Chemistry, Seventh Edt., Electronic Release, 2008, Wiley-VCH , Weinheim, New York sowie die dort zitierte Literatur verwiesen. Im Zuge der Guerbet-Reaktion werden letztlich primäre Alkohole zu $\alpha$-verzweigten primären Alkoholen in Gegenwart geeigneter Katalysatoren dimerisiert. Gemäß der Literatur bilden sich primär aus den Alkoholen Aldehyde, welche anschließend durch Aldolkondensation unter Eliminierung von Wasser und nachfolgender Hydrierung zu gesättigten Alkoholen dimerisieren. Neben dem Hauptprodukt können noch verschiedene Nebenprodukte entstehen, beispielsweise ungesättigte $\alpha$-verzweigte primäre Alkohole falls die Hydrierung der Doppelbindung nicht vollständig erfolgt oder insbesondere $\alpha$-verzweigte primäre Alkohole, welche zusätzliche Verzweigungen in der Seitenkette oder Hauptkette aufweisen.

Bei einem bevorzugten Rest $R^{2a}$ handelt es sich um einen von einem Guerbet-Alkohol abgeleiteten Rest, also einem technischen Gemisch verschiedener Reste, bei dem mindestens 65 mol %, bevorzugt mindestens 80 mol% der Reste die allgemeine Formel (II) aufweisen

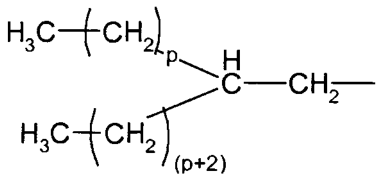

(II)

,

wobei p für 0, 1 oder 2 stehen kann. Bevorzugt steht p für 2.

Bei $R^{2b}$ handelt es sich um einen Phenylrest oder einfach alkylsubstituierte Phenylreste $R^6$-Phenyl-, wobei es sich bei $R^6$ um einen Alkylrest mit 1 bis 5 C-Atomen handelt. Insbesondere handelt es sich um einen linearen Alkylrest, bevorzugt sind Methyl- oder Ethylreste und besonders bevorzugt ist Methyl.

Beispiele für Reste $R^{2b}$ umfassen Phenyl-, 2-Methyl-1-phenyl-, 3-Methyl-1-phenyl-, 4-Methyl-1-phenyl, 2-Ethyl-1-phenyl-, 3-Ethyl-1-phenyl- oder 4-Ethyl-1-phenyl, bevorzugt sind Phenyl, 2-Methyl-1-phenyl-, 3-Methyl-1-phenyl-, 4-Methyl-1-phenyl und besonders bevorzugt ist Phenyl.

Bei $R^{2c}$ handelt es sich um phenylsubstituierte Kohlenwasserstoffreste der allgemeinen Formel Phenyl-$R^7$-, wobei es sich bei $R^7$ um einen zweiwertigen Kohlenwasserstoffrest mit 1 bis 5 Kohlenstoffatomen handelt, bevorzugt 1 oder 2 Kohlenstoffatomen handelt. Beispiele für bevorzugte Reste $R^{2c}$ sind Benzylreste sowie Phenyl-$CH_2$-$CH_2$- und Phenyl-$CH(CH_3)$-.

Die Cotenside (B) umfassen weiterhin n Gruppen $-(R^3-O)-$. Bei den n Resten $R^3$ handelt es sich unabhängig

voneinander um Ethylen- oder um Propylengruppen. Die Ethylen- und Propylengruppen können -sofern beide Arten von Gruppen vorhanden sindstatistisch, alternierend oder in Blockstruktur angeordnet sein. Bevorzugt handelt es sich um eine Blockstruktur bei der die Propoxy- und Ethoxygruppen tatsächlich in der Reihenfolge $R^2O$ - Propoxyblock - Ethoxyblock- angeordnet sind.

Die Zahl n steht hierbei für eine Zahl von 2 bis 20, bevorzugt 6 bis 15 und besonders bevorzugt 6 bis 10. Wie dem Fachmann bekannt ist, handelt es sich bei Alkoxylierungsgraden um Durchschnittswerte. Die Zahl n ist dementsprechend keine natürliche Zahl sondern eine rationale Zahl.

Im Regelfalle sollte es sich bei nicht mehr als 50 % der n Reste $R^3$ um Propylengruppen handeln. Bevorzugt handelt es sich bei 0 bis 2 der n Reste $R^3$ um eine Propylengruppe und besonders bevorzugt sind ausschließlich Ethylengruppen vorhanden.

Bei $R^4$ kann es sich um Wasserstoff handeln. In diesem Falle handelt es sich bei dem Cotensid (B) um ein nichtionisches Tensid der allgemeinen Formel $R^2$-O-($R^3$-O)$_n$-H.

Weiterhin kann es sich um eine Gruppe ausgewählt aus der Gruppe von -$SO_3H$, -$PO_3H_2$, -$R^5$-COOH, -$R^5$-$SO_3H$ oder -$R^5$-$PO_3H_2$ oder Salzen davon handeln. Bei der Gruppe $R^5$ handelt es sich um eine zweiwertige Kohlenwasserstoffgruppe mit 1 bis 4 Kohlenstoffatomen, welche optional funktionelle Gruppen, insbesondere -OH, als Substituenten aufweisen kann. Bevorzugt handelt es sich um eine Gruppe, ausgewählt aus der Gruppe von Methylengruppen -$CH_2$-, 1,2-Ethylengruppen -$CH_2$-$CH_2$- , 1,2-Propylengruppen -$CH_2$-$CH(CH_3)$- bzw. -$CH(CH_3)$-$CH_2$-oder 1,3-Propylengruppen -$CH_2$-$CH(R^8)$-$CH_2$-, wobei $R^8$ für H oder OH stehen kann.

Geeignete Gegenionen für Salze der Cotenside umfassen insbesondere $NH_4^+$-, Ammoniumionen mit organischen Resten oder Alkalimetallionen, insbesondere $Li^+$, $Na^+$ und $K^+$, und besonders bevorzugt $Na^+$.

Mit den genannten Endgruppen resultieren Cotenside (B) aus der Gruppe der Polyethersulfate $R^2$-O-($R^3$-O)$_n$-$SO_3H$, Polyethersulfonate $R^2$-O-($R^3$-O)$_n$-$R^5$-$SO_3H$, Polyetherphosphate $R^2$-O-($R^3$-O)$_n$-$PO_3H_2$, Polyetherphosphonate $R^2$-O-($R^3$-O)-$R^5$-$PO_3H_2$ oder Polyethercarboxylate $R^2$-O-($R^3$-O)$_n$-$R^5$-COOH. Bevorzugt sind nichtionische Cotenside $R^2$-O-($R^3$-O)$_n$-H, Polyethersulfonate $R^2$-O-($R^3$-O)$_n$-$R^5$-$SO_3H$ und Polyetherphosphate $R^2$-O-($R^3$-O)$_n$-$PO_3H_2$- Im Falle der Polyetherphosphate handelt es sich bevorzugt um Verbindungen der Formel $R^{2b}$-O-($R^3$-O)$_n$-$PO_3H_2$.

Die erfindungsgemäß verwendeten Cotenside (B) können in prinzipiell bekannter Art und Weise durch Alkoxylierung eines Alkohols $R^2$-OH zu einem nichtionischen Tensid $R^2$-O-($R^3$-O)$_n$-H hergestellt werden, d.h. es wird ein Produkt mit $R^4$ = H erhalten. Cotenside mit anderen Gruppen $R^4$ können synthetisiert werden, indem man die erhaltenen, nichtionischen Tenside $R^2$-O-($R^3$-O)$_n$-H in weiteren Reaktionsstufen zu den entsprechenden anionisch modifizierten Polyethern umgesetzt werden.

Die Durchführung von Alkoxylierungen ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate beeinflussen kann.

Die Cotenside $R^2$-O-($R^3$-O)$_n$-H können beispielsweise durch basenkatalysierte Alkoxylierung von Alkoholen $R^2$-OH hergestellt werden. Dazu kann der Alkohol $R^2$-OH bzw. das technische Alkoholgemisch $R^2$-OH in einem Druckreaktor mit Alkalihydroxiden, bevorzugt Kaliumhydroxid oder mit Alkalialkoholaten wie beispielsweise Natriummethylat versetzt werden. Durch verminderten Druck (bspw. $<100$ mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und das oder die Alkylenoxid(e) bei Temperaturen von 60 bis 180°C bis zu einem Druck von max. 10 bar schrittweise zugegeben. Am Ende der Reaktion kann der Katalysator durch Zugabe von Säure (z.B. Essigsäure oder Phosphorsäure) neutralisiert und kann bei Bedarf abfiltriert werden. Mittels KOH-Katalyse hergestellte Cotenside weisen in der Regel eine relativ breite Molkulargewichtsverteilung auf.

Die Cotenside $R^2$-O-($R^3$-O)$_n$-H können auch mittels dem Fachmann bekannten Techniken synthetisiert werden, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der Alkohol $R^2$-OH mit dem Katalysator versetzt, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben.

Die Cotenside $R^2$-O-($R^3$-O)$_n$-H können weiterhin auch durch säurekatalysierte Alkoxylierung hergestellt werden. Bei den Säuren kann es sich um Brönstedt- oder Lewissäuren handeln. Zur Durchführung der Reaktion kann der Alkohol $R^2$-OH mit dem Katalysator versetzt, die Mischung wie oben beschrieben entwässert werden und mit den Alkylenoxiden wie beschrieben umgesetzt werden. Am Ende der Reaktion kann der Katalysator durch Zugabe einer Base, beispielsweise KOH oder NaOH neutralisiert und bei Bedarf abfiltriert werden.

Mit der Wahl des Katalysators kann auch die Struktur des Tensids beeinflusst werden. Während bei basischer

Katalyse eingesetzte Propyleneinheiten überwiegend in der Orientierung $R^2$-O-(-$CH_2$-$CH(CH_3)$-$)_n$- eingebaut werden, werden bei saurer Katalyse die Einheiten zu größeren Teilen in der inversen Orientierung $R^2$-O-(-$CH(CH_3)$-$CH_2$-$)_n$-eingebaut.

Die Umsetzung von $R^2$-O-($R^3$-O$)_n$-H zu den anionisch modifizierten Tensiden mit einer Gruppe $R^4$ ausgewählt aus der Gruppe von -$SO_3H$, -$PO_3H_2$, -$R^5$-COOH, -$R^5$-$SO_3H$ oder -$R^5$-$PO_3H_2$ kann ebenfalls nach dem Fachmann bekannten Methoden vorgenommen werden.

Polyethersulfate der allgemeinen Formel $R^2$-O-($R^3$-O$)_n$-$SO_3H$ können durch Verestern von $R^2$-O-($R^3$-O$)_n$-H mit Schwefelsäure oder Derivaten davon, insbesondere $SO_3$ synthetisiert werden.

Polyethersulfonate $R^2$-O-($R^3$-O$)_n$-$R^5$-$SO_3H$ können beispielsweise durch Substitution der OH-Gruppe von $R^2$-O-($R^3$-O$)_n$-H gegen Cl unter Verwendung von Phosgen oder Thionylchlorid hergestellt werden. Die Umsetzung kann in Gegenwart eines Lösungsmittels wie z.B. Chlorbenzol vorgenommen werden. Dabei frei werdende HCl sowie freiwerdendes $CO_2$ oder $SO_2$ kann vorteilhaft durch Strippen mit Stickstoff aus dem System entfernt, so dass eine Etherspaltung unterbunden wird. Die Alkylalkoxychlor-Verbindung wird im Anschluss daran mit einer wässrigen Lösung von Natriumsulfit umgesetzt, wobei das Chlorid durch Sulfit substituiert wird und das Alkylethersulfonat erhalten wird. Die Substitution kann in Gegenwart eines Phasenvermittlers (bspw. $C_1$- bis $C_8$-Alkohole) bei einer Temperatur 100 -180°C und unter Druck vorgenommen werden. Je nachdem, ob im Ausgangsmaterial $R^2$-O-($R^3$-O$)_n$-H eine Ethoxygruppe oder eine Propoxygruppe als terminale Gruppe vorhanden ist, weist das Polyethersulfonat als terminale Gruppe -$R^5$-$SO_3H$ eine -$CH_2CH_2$-$SO_3H$ oder -$CH(CH_3)$-$CH_2$-$SO_3H$ bzw. - $CH_2$-$CH(CH_3)$-$SO_3H$-Gruppe auf.

Polyethersulfonate $R^2$-O-($R^3$-O$)_n$-$R^5$-$SO_3H$ können alternativ durch Addition von Vinylsulfonsäure an $R^2$-O-($R^3$-O$)_n$-H erhalten werden. Einzelheiten hierzu sind beispielsweise in EP 311 961 A1 beschrieben. Polyethersulfonate $R^2$-O-($R^3$-O$)_n$-$R^5$-$SO_3H$ mit einer terminalen Gruppe -$CH_2$-$CH_2$-$CH_2$-$SO_3H$ können erhalten werden, indem man $R^2$-O-($R^3$-O$)_n$-H mit 1,3-Propansulton umsetzt. Polyethersulfonate $R^2$-O-($R^3$-O$)_n$-$R^5$-$SO_3H$ mit einer terminalen Gruppe -$CH_2$-CH(OH)-$CH_2$-$SO_3H$ sind durch die Umsetzung von $R^2$-O-($R^3$-O$)_n$-H mit Epichlorhydrin und nachfolgender nucleophiler Substitution der Chloridgruppe durch Natriumsulfit zugänglich.

Polyethercarboxylate $R^2$-O-($R^3$-O$)_n$-$R^5$-COOH können erhalten werden, indem man $R^2$-O-($R^3$-O$)_n$-$CH_2CH_2$O-H mit geeigneten Oxidationsmitteln oxidiert. Geeignete sind hierzu alle Oxidationsmittel geeignet, ggf. in Verbindung mit geeigneten Katalysatoren, welche die terminale OH-Gruppe zur COOH-Gruppe oxidieren können, ohne in großem Maße andere Teile des Moleküls zu oxidieren. Die Oxidation kann beispielsweise mit Hilfe von Luft oder Sauerstoff unter Verwendung eines Edelmetallkatalysators (beispielsweise eines Katalysators auf Basis von Palladium) vorgenommen werden. Bei dieser Synthesevariante wird eine terminale Gruppe -$CH_2$-COOH erhalten.

Weiterhin kann man $R^2$-O-($R^3$-O$)_n$-H mit Halogencarbonsäuren, bevorzugt ω-Halogencarbonsäuren der allgemeinen Formel Hal-$R^4$-COOH umsetzen. Ebenfalls möglich ist es, mittels einer Michael-Addition (Meth)acrylsäure oder einen (Meth)acrylsäureester zu addieren. Falls die Ester verwendet werden, werden diese nach der Addition verseift. Bei dieser Synthesevarianten werden -je nachdem, ob Acrylsäure oder (Meth)acrylsäure verwendet wurde- terminale Gruppen -$CH_2$-$CH_2$-COOH oder -$CH_2$-$CH(CH_3)$-COOH erhalten.

Polyetherphosphate $R^2$-O-($R^3$-O$)_n$-$PO_3H_2$ können durch Veresterung von $R^2$-O-($R^3$-O$)_n$-H mit Phosphorsäure oder reaktiven Derivaten davon erhalten werden.

Polyetherphosphonate $R^2$-O-($R^3$-O$)_n$-$R^5$-$PO_3H_2$ können z.B. durch basenkatalysierte Addition von $R^2$-O-($R^3$-O$)_n$-H an Vinylphosphonsäure oder deren Salze hergestellt werden. Sie können weiterhin mittels der Arbuzov-Reaktion erhalten werden (siehe z.B. T. Laue und A. Plagens in "Namens- und Schlagwort-Reaktionen der organischen Chemie", Teubner, Stuttgart, 1998, S. 16ff). Hierbei werden Chloride oder bevorzugt Bromide von $R^2$-O-($R^3$-O$)_n$-H, d.h. $R^2$-O-($R^3$-O$)_n$-$R^3$-Cl oder $R^2$-O-($R^3$-O$)_n$-$R^3$-Br mit Estern der phosphorigen Säure $P(OR')_3$ umgesetzt und so $R^2$-O-($R^3$-O$)_n$-P(=O)$(OR')_2$ erhalten, die anschließend zu $R^2$-O-($R^3$-O$)_n$-P(=O)$(OH)_2$ verseift werden können. Eine Variante ist die Reaktion der Chloride $R^2$-O-($R^3$-O$)_n$-$R^3$-Cl mit Phosphin ($PH_3$) und anschließender Oxidation zur Phosphonsäure. Dies kann z.B. mittels Peroxiden oder $H_2O_2$ erfolgen.

Bevorzugte Cotenside (B) umfassen nichtionische Tenside $R^{2a}$-O-(-$CH_2$-$CH_2$-O$)_n$-H, wobei n den Wert von 6 bis 9 aufweist und es sich bei $R^{2a}$ um einen $C_{10}$-Rest oder einen Rest mit im Mittel 9,5 bis 10,5 Kohlenstoffatomen handelt, also Tensiden auf Basis typischer technischer Alkoholgemische. Besonders bevorzugt kann es sich um Tenside auf Basis von $C_{10}$-Guerbetalkoholen handeln.

Weitere bevorzugte Cotenside (B) umfassen anionisch modifizierte Tenside $R^{2a}$-O-(-$CH_2$-$CH_2$-O$)_n$-$SO_3H$, wobei n den Wert von 2 bis 9 aufweist und es sich bei $R^{2a}$ um einen $C_{10}$-Rest oder einen Rest mit im Mittel 9,5 bis 10,5 Kohlenstoffatomen handelt, also Tensiden auf Basis typischer technischer Alkoholgemische. Besonders bevorzugt kann es sich um Tenside auf Basis von $C_{10}$-Guerbetalkoholen handeln.

Weitere bevorzugte Cotenside (B) umfassen anionisch modifizierte Tenside $R^{2a}$-O-(-$CH_2$-$CH_2$-O$)_n$-$R^5$-$SO_3H$, wobei n den Wert von 2 bis 9 aufweist und es sich bei $R^{2a}$ um einen $C_{10}$-Rest oder einen Rest mit im Mittel 9,5 bis 10,5 Kohlenstoffatomen handelt, also Tensiden auf Basis typischer technischer Alkoholgemische. Besonders bevorzugt kann es sich um Tenside auf Basis von $C_{10}$-Guerbetalkoholen handeln.

Weitere bevorzugte Cotenside (B) umfassen anionisch modifizierte Tenside $R^{2a}$-O-(-$CH_2$-$CH_2$-O$)_n$-$R^5$-$CO_2H$,

wobei n den Wert von 2 bis 9 aufweist und es sich bei $R^{2a}$ um einen $C_{10}$-Rest oder einen Rest mit im Mittel 9,5 bis 10,5 Kohlenstoffatomen handelt, also Tensiden auf Basis typischer technischer Alkoholgemische. Besonders bevorzugt kann es sich um Tenside auf Basis von $C_{10}$-Guerbetalkoholen handeln.

Bevorzugte Cotenside (B) umfassen weiterhin anionische Tenside der allgemeinen Formel $R^{2b}$-O-($CH_2$-$CH_2$-O)$_n$- $PO_3H_2$, wobei n den Wert von 4 bis 6 aufweist und es sich bei $R^{2b}$ um einen Phenylrest handelt.

Weitere bevorzugte Cotenside (B) umfassen weiterhin anionische Tenside der allgemeinen Formel $R^{2b}$-O-($CH_2$-$CH_2$-O)$_n$- $SO_3H$, wobei n den Wert von 4 bis 6 aufweist und es sich bei $R^{2b}$ um einen Phenylrest handelt.

Weitere bevorzugte Cotenside (B) umfassen weiterhin anionische Tenside der allgemeinen Formel $R^{2b}$-O-($CH_2$-$CH_2$-O)$_n$- $R^5$ - $SO_3H$, wobei n den Wert von 4 bis 6 aufweist und es sich bei $R^{2b}$ um einen Phenylrest handelt.

Weitere Cotenside (C)

Die Tensidmischung kann darüber hinaus optional noch weitere, von den Tensiden (A) sowie den Cotensiden (B) verschiedene Cotenside (C) enthalten.

Auch die Cotenside (C) weisen hydrophobe und hydrophile Molekülteile auf. Hierbei kann es sich insbesondere um polymere Cotenside handeln. Mit polymeren Cotensiden lässt sich vorteilhaft die zur Bildung einer Mikroemulsion notwendige Menge an Tensid reduzieren. Derartige polymere Cotenside werden daher auch als "Mikroemulsionsbooster" bezeichnet.

Bei polymeren Cotensiden (C) kann es sich insbesondere um amphiphile Blockcopolymere handeln, welche mindestens einen hydrophilen und mindestens einen hydrophoben Blocke umfassen. Derartige Cotenside sind in WO 2006/131541 beschreiben. Sie weisen bevorzugt molekulare Massen $M_n$ von 1000 bis 50000 g/mol auf. Die hydrophilen und die hydrophoben Blöcke sollten im dabei im Regelfalle zumindest eine molare Masse von jeweils 500 g/mol, bevorzugt 750 g/mol und besonders bevorzugt 1000 g/mol aufweisen. Die hydrophoben und hydrophilen Blöcke können hierbei auf verschiedene Art und Weise miteinander verknüpft werden. Es kann sich beispielsweise um Zweiblockcopolymere handeln oder um Mehrblockcopolymere, bei denen die hydrophoben und hydrophilen Blöcke alternierend angeordnet sind. Die polymere können linear, verzweigt oder sternförmig sein, oder es kann sich auch um ein Kammpolymere handeln, welches eine Hauptkette sowie eine oder mehrere damit verknüpfte Seitenketten aufweist.

Bevorzugt sind Blockcopolymere, welche als hydrophile Blöcken Polyethylenoxidblöcke oder statistische Polyethylenoxid-Polypropylenoxidblöcke aufweisen, wobei der Propylenoxidanteil 40 mol %, bevorzugt 20 mol % und besonders bevorzugt 10 mol % bezüglich der Summe der in den Block einpolymerisierten Ethylenoxid- und Propylenoxideinheiten nicht übersteigen sollte. Bevorzugt handelt es sich um reine Polyethylenoxidblöcke. Bei den hydrophoben Blöcken kann es beispielsweise um Blöcke aus Polypropylenoxid oder $C_4$- bis $C_{12}$-Alkylenoxiden handeln. Weiterhin können hydrophobe Blöcke beispielsweise aus Kohlenwasserstoffeinheiten oder (Meth)acrylsäureestern aufgebaut werden.

Bevorzugte polymere Cotenside (C) umfassen Polypropylenoxid-Polyethylenoxid-Blockcopolymere, Polyisobuten-Polyethylenoxid-Blockcopolymere sowie Kammpolymere mit Polyethylenoxid-Seitenketten und einer hydrophoben Hauptkette, wobei die Hauptkette bevorzugt im Wesentlichen Olefine oder (Meth)acrylate als Baueinheiten umfasst. Der Begriff "Polyethylenoxid" soll hierbei jeweils Propylenoxideinheiten umfassende Polyethylenoxidblöcke gemäß obiger Definition einschließen. Nähere Einzelheiten zu den bevorzugten polymeren Cotensiden (C) sind in WO 2006/131541 offenbart.

Verwendung der Tensidmischung zur tertiären Erdölförderung

Erfindungsgemäß wird die beschriebene Tensidmischung aus den Tensiden (A), den Cotensiden (B) sowie optional Cotensiden (C) zur tertiären Erdölförderung (EOR) verwendet werden. Sie bewirkt durch eine starke Herabsetzung der Grenzflächenspannung zwischen Öl und Wasser eine besonders gute Mobilisierung des Rohöls in der Erdölformation.

Erfindungsgemäß beträgt die Menge der Tenside (A) in der Mischung 1 bis 99 Gew. %, insbesondere 50 bis 99 Gew. %, bevorzugt 50 bis 95 Gew. %, besonders bevorzugt 60 bis 90 Gew. % und ganz besonders bevorzugt 70 bis 85 Gew. %, bezogen auf die gesamte Menge aller Tenside (A), Cotenside (B) sowie gegebenenfalls Cotenside (C). Erfindungsgemäß beträgt die Menge der Cotenside (B) in der Mischung 1 bis 90 Gew. %, insbesondere 1 bis 50 Gew. %, bevorzugt 5 bis 50 Gew. %, besonders bevorzugt 10 bis 40 Gew. % und ganz besonders bevorzugt 15 bis 30 Gew. %, bezogen auf die gesamte Menge aller Tenside (A), Cotenside (B) sowie gegebenenfalls Cotenside (C).

Das Gewichtsverhältnis der Tenside (A) zu den Cotensiden (B) in der Mischung beträgt in der Regel mindestens 1 : 9, bevorzugt mindestens 1:1, besonders bevorzugt mindestens 2:1 und ganz besonders bevorzugt mindestens 3:1.

Die Menge der Tenside (A) und der Cotenside (B) zusammen beträgt erfindungsgemäß mindestens 25 Gew. % bezüglich der Gesamtmenge aller eingesetzten Tenside (A), Cotenside (B) sowie Cotenside (C), insbesondere mindestens 51 Gew. %, bevorzugt mindestens 80 Gew. %, besonders bevorzugt mindestens 90 Gew. %., und ganz besonders bevorzugt sind gar keine Cotenside (C) vorhanden.

Zur tertiären Erdölförderung wird Tensidmischung in Form einer geeigneten Formulierung durch mindestens eine Injektionsbohrung in die Erdöllagerstätte eingepresst, und der Lagerstätte wird durch mindestens eine Produktionsbohrung Rohöl entnommen. Mit dem Begriff "Rohöl" ist in diesem Zusammenhang selbstverständlich nicht phasenreines Öl gemeint, sondern die üblichen Rohöl-Wasser-Emulsionen. In der Regel wird eine Lagerstätte mit mehreren Injektionsbohrungen und mit mehreren Produktionsbohrungen versehen. Im Anschluss an das Einpressen der Tensidformulierung, dem sogenannten "Tensidfluten" kann zur Aufrechterhaltung des Drucks Wasser in die Formation injiziert werden ("Wasserfluten"), oder bevorzugt eine höherviskose, wässrige Lösung eines stark verdickend wirkenden Polymers ("Polymerfluten"). Es sind aber auch Techniken bekannt, nach dem man die Tenside zunächst einmal auf die Formation einwirken lässt. Dem Fachmann sind Einzelheiten zur technischen Durchführung des "Tensidflutens", "Wasserflutens" und "Polymerflutens" bekannt, und er wendet je nach Art der Lagerstätte eine entsprechende Technik an.

Die erfindungsgemäß verwendete Tensidmischung wird hierbei bevorzugt in wässriger Formulierung eingesetzt. Neben Wasser können die Formulierungen optional auch noch mit Wasser mischbare oder zumindest in Wasser dispergierbare organische Lösemittel umfassen. Derartige Zusätze dienen insbesondere zur Stabilisierung der Tensidlösung während der Lagerung bzw. des Transportes zum Ölfeld. Die Menge derartiger zusätzlicher Lösemittel sollte aber im Regelfalle 50 Gew. %, bevorzugt 20 Gew. % und besonders bevorzugt 10 Gew. % nicht überschreiten. In einer besonders vorteilhaften Ausführungsform der Erfindung wird ausschließlich Wasser zu formulieren verwendet. Beispiele mit Wasser mischbarer Lösemittel umfassen insbesondere Alkohole, wie Methanol, Ethanol oder Propanol.

Die Konzentration der Tenside in der eingesetzten Formulierung wird vom Fachmann je nach der Anwendung bestimmt. Bewährt hat sich eine Gesamtensidkonzentration von 0,5 bis 3,5 Gew. %, ohne dass die Erfindung hierauf beschränkt sein soll. Der Fachmann trifft je nach den gewünschten Eigenschaften, insbesondere je nach den Verhältnissen in der Erdölformation eine geeignete Auswahl. Es ist selbstverständlich möglich, zunächst ein Konzentrat herzustellen, welches erst vor Ort auf die gewünschte Konzentration verdünnt.

Die erfindungsgemäß verwendete Mischung kann bevorzugt zum Tensidfluten von Lagerstätten eingesetzt werden, deren Formationswässer mehr als 150 g/l gelöster Salze enthält, insbesondere für Lagerstätten, deren Formationswässer mehr als 10 g/l, bevorzugt mehr als 30 g/l Erdalkaliionen enthalten.

Sie eignet sich insbesondere zum Mikroemulsionsfluten von Öllagerstätten (Fluten im Winsor III-Bereich bzw. im Existenzgebiet der bikontinuierlichen Mikroemulsionsphase). Die Technik des Mikroemulsionsflutens wurde bereits eingangs ausführlich geschildert.

Die Tensidmischung kann darüber hinaus im mizellaren Fluten von Öllagerstätten (Fluten im Winsor I-Bereich bzw. im Öl-Wasser-Bereich) eingesetzt werden. Während im Mikroemulsionsfluten ein kurzer Puls (0,1 - 0,3 % des Porenvolumens der Lagerstätte) einer Lösung eingepresst wird, die genügend Tensid enthält (0,5-3,5 Gew. %), um die Bildung der Mikroemulsionzu gewährleisten, wird beim mizellaren Fluten ein langer Puls (bis 1,0 % des Porenvolumen) bei geringer Tensidkonzentration (< 0,5, bevorzugt 0,1 %) injiziert.

Die nachfolgenden Beispiele sollen die Erfindung näher erläutern:

<u>Eingesetzte Tenside:</u>

<u>Tensid (A)</u>

Als Tensid (A) wurde ein iso-$C_{16}$-Olefinsulfonat verwendet, welches durch Sulfonierung eines verzweigten $C_{16}$-Olefins hergestellt wurde. Das $C_{16}$-Olefin wurde in prinzipiell bekannter Art Weise durch Oligomerisierung eines technischen Gemischs verschiedener Butene gefolgt von der Isolierung des $C_{16}$-Olefins hergestellt.

I) Olefinologomerisierung:

In einem isotherm betriebenen Reaktor einer Länge von etwa 1,5 m und eines Durchmessers von 30 mm wurde bei 20 bar und 80 °C Raffinat II der nachstehenden Zusammensetzung an einem heterogenen Katalysator umgesetzt.

| | |
|---|---|
| i-Butan: | 3 Gew.-% |
| n-Butan: | 15 Gew.-% |
| i-Buten: | 2 Gew.-% |
| Buten-1: | 30 Gew.-% |
| Buten-2-trans: | 32 Gew.-% |
| Buten-2-cis: | 18 Gew.-% |

Als Katalysator diente ein Material, das gemäß der DE-A-43 39 713 in Form von Tabletten (5 mm x 5 mm)

hergestellt worden war. Die Zusammensetzung in Gew.-% der Aktivkomponenten war: 50 Gew.-% NiO, 12,5 Gew.-% $TiO_2$, 33,5 Gew.-% $SiO_2$, 4 Gew.-% $Al_2O_3$. Der Durchsatz betrug 0,75 kg Raffinat II/(I (Kat) x h). Man arbeitete ohne Rückführung von $C_4$-Kohlenwasserstoffen. Der $C_4$-Umsatz, bezogen auf die im Raffinat II enthaltenen Butene, betrug 52,0 Gew.-%.

Die Selektivität in Gew.-% war wie folgt: $C_8$: 76,9; $C_{12}$: 18,4 und $C_{16+}$: 4,7.

II) Destillation des $C_{16+}$-Gemischs:

Das rohe $C_{16+}$-Gemisch wurde in einer technischen Destillationsanlage bestehend aus zwei Kolonnen mit je ca. 15 m Packungshöhe (250 $m^2/m^3$) destilliert. Dabei wurden in der ersten Kolonne (Vorlaufkolonne) noch enthaltene Leichtsieder (vor allem $C_{12}$-Olefine) über Kopf genommen. In der zweiten Kolonne (Hauptlaufkolonne) wurde über Kopf das $C_{16}$-Olefin mit einer Reinheit von > 99 % abgenommen, während die $C_{20+}$-Olefine im Sumpf abgetrennt wurden.

Die beiden Kolonnen wurden mit folgenden Parametern betrieben:

| | Vorlaufkolonne | Hauptlaufkolonne |
|---|---|---|
| Kopftemperatur | 135 °C | 165 °C |
| Sumpftemperatur | 180 - 182 °C | 225 - 230 °C |
| Druck (Kopf) | 85 mbar | 60 mbar |
| Druckverlust über Packung | ca. 5 mbar | ca. 50 mbar |
| Zulauf | 2700 kg/h | 2500 kg/h |
| Kopfabzug | 200 kg/h | 1700 kg/h |
| Rücklauf | 850 kg/h | 3000 kg/h |
| Sumpf | 2500 kg/h | 800 kg/h |

III) Sulfonierung des erhaltenen $iC_{16}$-Olefins

Die Sulfonierung des Olefins erfolgt mit $SO_3$ in einem Dünnfilm-Reaktor mit anschließender Neutralisation als kontinuierlicher Prozess. Das dazu benötigte $SO_3$ wird mittels eines Liqui-Flow dosiert (81 g/h) und in einem Glasverdampfer bei 100°C verdampft. In dem nachfolgenden Mischer wird der $SO_3$-Dampf mit Stickstoff vermischt (-1,24 % $SO_3$ im Gas bei 80°C Gaseinlass) und in den Filmreaktor geblasen (2.2 $m^3$/h). Gleichzeitig wird das Olefin mittels eines Cori-Flow über einen Ringspalt, der den Film erzeugt, in diesen Reaktor gefördert. Die Zulaufrate für das $iC_{16}$-Olefin beträgt dabei ca. 230 g/h; es fließt mit einer Temperatur von 23°C in den auf 15°C gekühlten Filmreaktor. Das $iC_{16}$-Olefin wird im Verhältnis zu $SO_3$ äquimolar eingesetzt.

Das Reaktionsgemisch wird in einen zweiten Reaktor mit der Temperatur von ca. 50°C geleitet. Dort wird der Gasstrom von der flüssigen Phase (intermediär gebildetes Sulton sowie Olefinsulfonsäure) abgetrennt und die flüssige Phase läuft in wässrige Natriumhydroxid-Lösung hinein. Die Neutralisation findet bei 40-60°C statt. Dabei bildet sich ein Gemisch aus neutralisiertem Olefinsulfonat und neutralisiertem Hydroxyalkylsulfonat. Bezüglich des intermediär entstandenen Sultons bzw. Olefinsulfonsäure werden 1.137 eq NaOH eingesetzt, so dass ein pH-Wert von pH = 12 resultiert. Das Produkt wird als wässrige Lösung abgezogen, verbrauchte NaOH-Lösung wird kontinuierlich in den Neutralisationsreaktor nachgefüllt.

Die Verbindung wurde per 1-H-NMR, IR-Spektroskopie und Size-Exclusion-Chromatographie bestätigt. Man erhielt das Olefinsulfonat als wässrige Lösung mit einem Wassergehalt von 74,7%.

Verwendete Cotenside (B)

$C13\text{-}EO_7$

Handelsübliches, nichtionisches Tensid der allgemeinen Formel $i\text{-}C_{13}H_{27}\text{-}O(CH_2\text{-}CH_2\text{-}O)_7\text{-}H$ auf Basis eines $C_{13}$-Oxoalkohols basierend auf Trimerbuten, welcher unter alkalischer Katalyse ethoxyliert wird. Mittlerer Verzweigungsgrad ca. 2,3. Mittlerer Ethoxylierungsgrad x ca. 7

$C13\text{-}EO_9$

Handelsübliches, nichtionisches Tensid der allgemeinen Formel $i\text{-}C_{13}H_{27}\text{-}O(CH_2\text{-}CH_2\text{-}O)_8\text{-}H$; Alkohol wie $C13\text{-}EO_7$, nur mittlerer Ethoxylierungsgrad x ca. 9

C10-$EO_6$

Handelsübliches, nichtionisches Tensid der allgemeinen Formel i-$C_{10}H_{21}$-$O(CH_2$-$CH_2$-$O)_6$-H auf Basis eines $C_{10}$-Oxoalkohols, welcher unter alkalischer Katalyse ethoxyliert wird. Mittlerer Verzweigungsgrad ca. 2,2. Mittlerer Ethoxylierungsgrad x ca. 6

C10-$EO_7$

Handelsübliches, nichtionisches Tensid der allgemeinen Formel i-$C_{10}H_{21}$-$O(CH_2$-$CH_2$-$O)_7$-H; Alkohol wie C10-$EO_6$, nur mittlerer Ethoxylierungsgrad x ca. 7

C10(Gue)-$EO_6$

Handelsübliches, nichtionisches Tensid der allgemeinen Formel i-$C_{10}H_{21}$-$O(CH_2$-$CH_2$-$O)_6$-H auf Basis eines $C_{10}$-Guerbet-Alkohols, welcher unter alkalischer Katalyse ethoxyliert wird. Der $C_{10}$-Guerbet-Alkohol umfasst etwa 85 mol % 2-Propylheptanol sowie ca. 15 mol % höher verzweigte Alkohole. Mittlerer Verzweigungsgrad ca. 1,15. Mittlerer Ethoxylierungsgrad x ca. 6

C10(Gue)-$EO_7$

Handelsübliches, nichtionisches Tensid der allgemeinen Formel i-$C_{10}H_{21}$-$O(CH_2$-$CH_2$-$O)_7$-H; Alkohol wie C10 (Gue)-$EO_6$, nur mittlerer Ethoxylierungsgrad x ca. 7

C10(Gue)-$EO_8$

Handelsübliches, nichtionisches Tensid der allgemeinen Formel i-$C_{10}H_{21}$-$O(CH_2$-$CH_2$-$O)_8$-H; Alkohol wie C10 (Gue)-$EO_6$, nur mittlerer Ethoxylierungsgrad x ca. 8

iC9-$EO_4$

Nichtionisches Tensid der allgemeinen Formel i-$C_9H_{19}$-$O(CH_2$-$CH_2$-$O)_4$-H auf Basis eines $C_9$-Oxoalkohols basierend auf Dimerbuten, welcher unter alkalischer Katalyse ethoxyliert wird. Mittlerer Verzweigungsgrad ca. 1,2. Mittlerer Ethoxylierungsgrad x = 4

iC9-$EO_6$

Nichtionisches Tensid der allgemeinen Formel i-$C_9H_{19}$-$O(CH_2$-$CH_2$-$O)_6$-H auf Basis eines $C_9$-Oxoalkohols basierend auf Dimerbuten, welcher unter alkalischer Katalyse ethoxyliert wird. Mittlerer Verzweigungsgrad ca. 1,2. Mittlerer Ethoxylierungsgrad x = 6

iC5-$EO_2$

Nichtionisches Tensid der allgemeinen Formel i-$C_5H_{11}$-$O(CH_2$-$CH_2$-$O)_2$-H auf Basis eines $C_5$-Oxoalkohols basierend auf Buten, welcher unter alkalischer Katalyse ethoxyliert wird. Mittlerer Verzweigungsgrad ca. 0,35. Mittlerer Ethoxylierungsgrad x = 2

iC5-$EO_3$

Nichtionisches Tensid der allgemeinen Formel i-$C_5H_{11}$-$O(CH_2$-$CH_2$-$O)_3$-H auf Basis eines $C_5$-Oxoalkohols basierend auf Buten, welcher unter alkalischer Katalyse ethoxyliert wird. Mittlerer Verzweigungsgrad ca. 0,35. Mittlerer Ethoxylierungsgrad x = 3

iC5-$EO_5$

Nichtionisches Tensid der allgemeinen Formel 1-$C_5H_{11}$-$O(CH_2$-$CH_2$-$O)_5$-H auf Basis eines $C_5$-Oxoalkohols basierend auf Buten, welcher unter alkalischer Katalyse ethoxyliert wird. Mittlerer Verzweigungsgrad ca. 0,35. Mittlerer Ethoxylierungsgrad x = 5

iC5-$EO_7$

Nichtionisches Tensid der allgemeinen Formel i-$C_5H_{11}$-O($CH_2$-$CH_2$-O)$_7$-H auf Basis eines $C_5$-Oxoalkohols basierend auf Buten, welcher unter alkalischer Katalyse ethoxyliert wird. Mittlerer Verzweigungsgrad ca. 0,35. Mittlerer Ethoxylierungsgrad x = 7

Anwendungstechnische Tests - Bildung einer Mikroemulsion

Formationswasser

Für die Versuche wurde ein stark salzhaltiges Wasser (ca. 70 g/l NaCl und ca. 10 g/l $CaCl_2$) eingesetzt, dessen Zusammensetzung einem typischen Lagerstättenwasser entspricht.

Ölphase

Als Modellöl wurde Dodecan verwendet.

Eingesetzte Tensidmischung:

Das in den Versuchen eingesetzte Tensidgemisch bestand aus 83,3 Gew.-% Tensid (A) (iso-C16-Olefinsulfonat) und jeweils 16,7 Gew.-% der für die jeweiligen Versuche verwendeten Cotenside (B).

Allgemeine Versuchsbeschreibung:

16,1 g Wasser, 1,4 g NaCl und 0,2 g wasserfreies $CaCl_2$ wurden in einen 50 ml Glas-Standzylinder mit einem Innendurchmeser von 2,2 cm vorgelegt und homogenisiert. Danach wurde 1 g Tensid (A) (3,95 g iso-C16-Olefinsulfonat; 25,3 Gew.-% in Wasser) und 0,2 g des jeweils verwendeten Cotensids (B) sowie 19,5 ml Dodecan zugegeben. Dies entspricht ca. 19,5 ml Wasserphase, ca. 19,5 ml Öl und ca. 1 ml Tensid, in Summe 40 ml. Das Gewichtsverhältnis von Tensid (A) zu Cotensid (B) beträgt 5:1.

Anschließend wurde das Gemenge bei 23°C unter Rühren equilibriert, dann bei 23°C stehen gelassen, bis sich drei klare Phasen gebildet hatten, schließlich wurden die Volumina der jeweiligen Phasen abgelesen. Von Bedeutung sind dabei insbesondere das Volumen der Mikroemulsionsphase — der Mittelphase — sowie die Differenz zwischen der Ölphase oben und der Wasserphase unten.

Nach der Trennung wurden die Phasen durch zweimaliges manuelles Umdrehen des Standzylinders vermengt und die Zeit gestoppt, bis die Phasen wieder klar getrennt Weiterhin kann aus den Versuchen die Grenzflächenspannung errechnet werden. Die Grenzflächenspannung zwischen Wasser und Öl wurde in bekannter Art und Weise über die Messung des Solubilisationsparameters SP* bestimmt. Die Bestimmung der Grenzflächenspannung über die Bestimmung des Solubilisationsparameters SP* ist eine in der Fachwelt akzeptierte Methode zur näherungsweisen Bestimmung der Grenzflächenspannung. Der Solubilisationsparameter SP° gibt an, wieviel ml Öl pro ml eingesetztem Tensid in einer Mikroemulsion (Windsor Typ III) gelöst wird, $SP^w$ gibt analog an, wieviel ml Wasserphase pro ml eingesetztem Tensid gelöst wird. Wird in einer Mikroemulsion gleich viel Wasser- und Ölphase gelöst, so gilt das System als ideal balanciert. SP° wird hier gleich $SP^w$ und als SP * bezeichnet; die Grenzflächenspannung zwischen Öl- und Wasserphase wird minimal. Diese Grenzflächenspannung $\sigma$ (interfacial tension; IFT) kann hieraus über die Näherungsformel IFT $\approx$ 0.3/ $(SP^*)^2$errechnet werden (C. Huh, J. Coll. Interf. Sc., Vol. 71, No. 2 (1979)).

Die Tennzeiten hängen von der Balance des Systems ab und sind sinnvoll vergleichbar wenn SP° = $SP^w$ = SP * (siehe D. O. Shah in "Surface Phenomena in Enhanced Oil Recovery", Plenum Press, 1981).

Die Ergebnisse der Beispiele und Vergleichsbeispiele sind in den Tabellen 1 bis 5 zusammengestellt.

Vergleichsbeispiel 1:

Als Cotensid (B) wurden Mischungen aus C13-$EO_7$ und C13-$EO_9$ eingesetzt, welche eine zu große Anzahl von C-Atomen aufweisen.

Im balancierten Zustand erhält man SP * = SP° = $SP^w$ = ca. 5, entsprechend einer Grenzflächenspannung zwischen Wasser und Öl von ca. 0,3/25 mN/m = ca. 0,012 mN/m, und eine Trennzeit von 7,5 Minuten. Die Ergebnisse sind in Tabelle 1 zusammengefasst.

Vergleichsbeispiel 2:

Statt Cotensid (B) wurde das Cosolvens Isobutanol verwendet. In Kombination mit dem Tensid (A) bildete sich jedoch keine Mikroemulsion, sondern ein flockiger Niederschlag. Isobutanol ist als Cotensid (B) offenbar ungeeignet.

Vergleichsbeispiel 3:

Als Cotensid (B) wurden Mischungen aus $iC_5$-$EO_2$, $iC_5$-$EO_3$, $iC_5$-$EO_5$ und iC5-$EO_7$ eingesetzt, welche eine zu niedrige Anzahl von C-Atomen aufweisen.
Ein balancierter Zustand konnte nicht gefunden werden. Gleichzeitig wurden Ausfällungen des Tensids beobachtet. Die Ergebnisse sind in Tabelle 2 zusammengefasst.

Beispiel 1:

Als Cotensid (B) wurden C10-$EO_6$ oder C10-$EO_7$ bzw. Mischungen davon eingesetzt. Im balancierten Zustand erhält man SP * = SP° = $SP^w$ = 4, entsprechend einer Grenzflächenspannung zwischen Wasser und Öl von 0,3/16 mN/m = 0,019 mN/m, und eine Trennzeit von 2,5 Minuten. Die Ergebnisse sind in Tabelle 3 zusammengefasst.

Beispiel 2:

Als Cotensid (B) wurden C10(Gue)-$EO_6$, C10(Gue)-$EO_7$ oder C10(Gue)-$EO_8$ eingesetzt. Im balancierten Zustand erhält man SP * = SP° = $SP^w$ = 5, entsprechend einer Grenzflächenspannung zwischen Wasser und Öl von 0,3/25 mN/m = 0,012 mN/m, und eine Trennzeit von 2,0 Minuten. Die Ergebnisse sind in Tabelle 4 zusammengefasst.

Beispiel 3:

Als Cotensid (B) wurden Mischungen aus iC9-$EO_4$ und iC9-$EO_6$ eingesetzt.
Im balancierten Zustand erhält man SP * = SP° = $SP^w$ = ca. 2,3, entsprechend einer Grenzflächenspannung zwischen Wasser und Öl von ca. (0,3)/(5,5) mN/m = ca. 0,055 mN/m, und eine Trennzeit von 4 Minuten. Die Ergebnisse sind in Tabelle 5 zusammengefasst.

Die Beispiele und Vergleichsbeispiele zeigen, dass C10-$EO_6$ und C10-$EO_7$ bei gleich großer Öl- und Wasserphase, d.h. ideal ausbalanciertem Tensidsystem eine dreimal schnellere Phasentrennung als C13-$EO_7$ + C13-$EO_9$.

Die Tenside auf Basis des Guerbetalkohols sorgen für eine fast viermal schnellere Phasentrennung als C13-$EO_7$ + C13-$EO_9$ und eine um 25% schnellere Phasentrennung als bei C10-$EO_6$ und C10-$EO_7$. Zudem ist die Mikroemulsionsphase bei Verwendung der Tenside auf Basis des Guerbetalkohols größer als bei C10-$EO_6$ und C10-$EO_7$. Gemäß der Formel von Huh ergibt sich für ersteres Tensidsystem damit eine geringere Grenzflächenspannung.

Bei Cotensiden mit weniger als 6 C-Atomen konnte ein balancierter Zustand nicht gefunden werden. Gleichzeitig wurden Ausfällungen des Tensids beobachtet.

Tabelle 1: Versuchsergebnisse mit nicht erfindungsgemäßen Cotensiden (B)

| Eingesetztes Cotensid (in Klammern Gewichtsverhältnis) | Volumen der Mikroemulsion [ml] | Grenzflächenspannung [mN/m] | Volumen Ölphase minus Volumen Wasserphase [ml] | Trennzeit [min] |
|---|---|---|---|---|
| C13-$EO_7$ + C13-$EO_9$ (75/25) | 11,5 | - | 1,5 | 16 |
| C3-$EO_7$ + C3-$EO_9$ (50/50) | 11 | 0,012 | 0 | 7,5 |
| C13-$EO_7$ + C13-$EO_9$ (40/60) | 13 | - | -2 | 30 |

Tabelle 2: Versuchsergebnisse mit nicht erfindungsgemäßen Cotensiden (B)

| Eingesetztes Cotensid (in Klammern Gewichtsverhältnis) | Volumen der Mikroemulsion [ml] | Grenzflächenspannung [mN/m] | Volumen Ölphase minus Volumen Wasserphase [ml] | Trennzeit [min] |
|---|---|---|---|---|
| iC5-OH | Keine Mittelphase + Niederschlag | - | | |
| iC5-$EO_2$ + iC5-$EO_3$ (75/25) | 5.5 ml + Niederschlag | | -0.5 | 14 min |
| iC5-$EO_3$ | Keine Mittelphase + Niederschlag | - | | |
| iC5-$EO_5$ | Keine Mittelphase | - | | |
| iC5-$EO_7$ | Keine Mittelphase | - | | |

Tabelle 3: Versuchsergebnisse mit erfindungsgemäßen Cotensiden (B)

| Eingesetztes Cotensid (in Klammern Gewichtsverhältnis) | Volumen der Mikroemulsion [ml] | Grenzflächenspannung [mN/m] | Volumen Ölphase minus Volumen Wasserphase [ml] | Trennzeit [min] |
|---|---|---|---|---|
| C10-$EO_6$ | 9,5 | - | 1,5 | 11 |
| C10-$EO_6$/C10-$EO_7$ (75/25) | 9 | 0,019 | 0 | 2,5 |
| C10-$EO_6$/C10-$EO_7$ (50/50) | 10 | - | -1 | 3 |
| C10-$EO_7$ | 10,5 | - | -1,5 | 10 |

Tabelle 4: Versuchsergebnisse mit erfindungsgemäßen Cotensiden (B) auf Basis von Guerbetalkoholen.

| Eingesetztes Cotensid (in Klammern Gewichtsverhältnis) | Volumen der Mikroemulsion [ml] | Grenzflächenspannung [mN/m] | Volumen Ölphase minus Volumen Wasserphase [ml] | Trennzeit [min] |
|---|---|---|---|---|
| C10(Gue)-$EO_6$ | 11 | - | 2,3 | 14 |
| C10(Gue)-$EO_7$ | 11 | 0,012 | 0 | 2 |
| C10(Gue)-$EO_8$ | 10,5 | - | -0,5 | 3 |

Tabelle 5: Versuchsergebnisse mit erfindungsgemäßen Cotensiden (B)

| Eingesetztes Cotensid (in Klammern Gewichtsverhältnis) | Volumen der Mikroemulsion [ml] | Grenzflächenspannung [mN/m] | Volumen Ölphase minus Volumen Wasserphase [ml] | Trennzeit [min] |
|---|---|---|---|---|
| iC9-$EO_4$ | 6 | - | 1 | 7 |
| iC9-$EO_4$ + iC9-$EO_6$ (65/35) | 7 | 0,055 | 0 | 4 |

## Patentansprüche

1. Verwendung einer Tensidmischung für die tertiäre Erdölförderung, wobei es sich um ein Verfahren zum Tensidfluten handelt, indem man eine Tensidformulierung durch mindestens eine Injektionsbohrung in eine Erdöllagerstätte einpresst, hierdurch die Grenzflächenspannung zwischen Erdöl und wässriger Phase absenkt, und der Lagerstätte durch mindestens eine Produktionsbohrung Rohöl entnimmt, wobei die Tensidmischung mindestens die folgenden Tenside umfasst:

   (A) 50 bis 99 Gew. % mindestens eines Tensids (A) der allgemeinen Formel $R^1$-X, wobei es sich bei $R^1$ um einen Kohlenwasserstoffrest mit 12 bis 30 C-Atomen und bei X um eine anionische oder nichtionische hydrophile Gruppe handelt, sowie
   (B) 1 bis 50 Gew. % mindestens eines Cotensids (B),

   wobei die Mengenangaben jeweils auf die Gesamtmenge aller Tenside in der Mischung bezogen sind, **dadurch gekennzeichnet, dass** das Cotensid (B) die allgemeine Formel $R^2$-O-($R^3$-O)$_n$-$R^4$ (I) aufweist, und wobei die Reste $R^2$, $R^3$ und $R^4$ sowie die Zahl n die folgende Bedeutung haben:

   n eine Zahl von 2 bis 20,
   $R^2$ ein verzweigter Kohlenwasserstoffrest mit 6 bis 11 Kohlenstoffatomen, welcher einen durchschnittlichen Verzweigungsgrad von 1 bis 2,5 aufweist, ausgewählt aus der Gruppe von
   $R^{2a}$ gesättigten, aliphatischen Kohlenwasserstoffresten, oder
   $R^{2b}$ Phenyl- oder $R^6$-Phenyl-, wobei es sich bei $R^6$ um einen Alkylrest mit 1 bis 5 Kohlenstoffatomen handelt,
   $R^{2c}$ phenylsubstituierte Kohlenwasserstoffreste der allgemeinen Formel Phenyl$R^7$-, wobei es sich bei $R^7$ um einen zweiwertigen Kohlenwasserstoffrest mit 1 bis 5 Kohlenstoffatomen handelt,
   $R^3$ unabhängig voneinander eine Ethylen- oder eine Propylengruppe, mit der Maßgabe, dass die Ethylen- und Propylengruppen -sofern beide Arten von Gruppen vorhanden sind- statistisch, alternierend oder in Blockstruktur angeordnet sein können,
   $R^4$ Wasserstoff oder eine Gruppe ausgewählt aus der Gruppe von $-SO_3H$,$-PO_3H_2$, -$R^5$-COOH, -$R^5$-$SO_3H$ oder -$R^5$-$PO_3H_2$ oder Salzen davon, wobei es sich bei $R^5$ um eine zweiwertige Kohlenwasserstoffgruppe mit 1 bis 4 Kohlenstoffatomen handelt,

   mit der Maßgabe, dass die Menge von Tensiden (A) und Cotensiden (B) zusammen mindestens 50 Gew. % bezüglich der Menge aller Tenside in der Mischung beträgt.

2. Verwendung gemäß Anspruch 1, **dadurch gekennzeichnet, dass** die Tenside mit der Wasser- und der Ölphase eine Mikroemulsion bilden.

3. Verwendung gemäß Anspruch 1 oder 2, **dadurch gekennzeichnet, dass** man im Anschluss an das Einpressen der Tensidformulierung zur Aufrechterhaltung des Drucks Wasser oder eine höherviskose, wässrige Lösung eines verdickend wirkenden Polymers injiziert.

4. Verwendung einer Tensidmischung gemäß einem der Ansprüche 1 bis 3, **dadurch gekennzeichnet, dass** es sich bei X um eine Sulfonsäuregruppe $-SO_3H$ oder ein Salz davon handelt.

5. Verwendung einer Tensidmischung gemäß einem der Ansprüche 1 bis 4, **dadurch gekennzeichnet, dass** n eine Zahl von 6 bis 15 ist.

6. Verwendung einer Tensidmischung gemäß einem der Ansprüche 1 bis 5, **dadurch gekennzeichnet, dass** es sich bei maximal 2 der n Reste $R^3$ um eine Propylengruppe handelt.

7. Verwendung einer Tensidmischung gemäß einem der Ansprüche 1 bis 6, **dadurch gekennzeichnet, dass** es sich bei allen n Resten $R^3$ um Ethylengruppen handelt.

8. Verwendung einer Tensidmischung gemäß einem der Ansprüche 1 bis 7, **dadurch gekennzeichnet, dass** es sich um einen Rest $R^{2a}$ mit einem mittleren Verzweigungsgrad von 1 bis 1,5 handelt.

9. Verwendung einer Tensidmischung gemäß einem der Ansprüche 1 bis 7, **dadurch gekennzeichnet, dass** es sich um einen Rest $R^{2a}$ mit im Mittel 8 bis 10 Kohlenstoffatomen handelt.

**10.** Verwendung einer Tensidmischung gemäß einem der Ansprüche 1 bis 7, **dadurch gekennzeichnet, dass** es sich um einen Rest $R^{2a}$ mit im Mittel 9,5 bis 10,5 Kohlenstoffatomen handelt.

**11.** Verwendung einer Tensidmischung gemäß einem der Ansprüche 1 bis 7, **dadurch gekennzeichnet, dass** es sich um einen Rest $R^{2a}$ handelt, der sich von einem Guerbet-Alkohol ableitet und bei dem mindestens 65 mol % die allgemeine Formel (II)

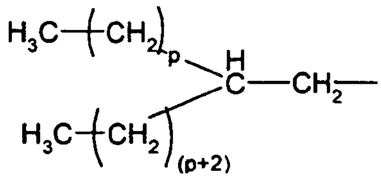

(II)

aufweisen, wobei p für 0, 1 oder 2 steht.

**12.** Verwendung einer Tensidmischung gemäß einem der Ansprüche 1 bis 7, **dadurch gekennzeichnet, dass** es sich um einen Rest $R^{2b}$ handelt, ausgewählt aus der Gruppe von Phenyl-, 2-Methyl-1-phenyl-, 3-Methyl-1-phenyl-, 4-Methyl-1-phenyl, 2-Ethyl-1-phenyl-, 3-Ethyl-1-phenyl- oder 4-Ethyl-1-phenyl.

**13.** Verwendung einer Tensidmischung gemäß einem der Ansprüche 1 bis 12, **dadurch gekennzeichnet, dass** es sich bei $R^4$ um $-R^5-SO_3H$ oder ein Salz davon handelt.

**14.** Verwendung einer Tensidmischung gemäß einem der Ansprüche 1 bis 12, **dadurch gekennzeichnet, dass** es sich bei $R^4$ um Wasserstoff handelt.

**15.** Verwendung einer Tensidmischung gemäß einem der Ansprüche 1 bis 12, **dadurch gekennzeichnet, dass** es sich bei $R^4$ um $-PO_3H_2$ oder ein Salz davon handelt.

**16.** Verwendung einer Tensidmischung gemäß einem der Ansprüche 1 bis 15, **dadurch gekennzeichnet, dass** das Gewichtsverhältnis der Tenside (A) zu den Cotensiden (B) mindestens 2 : 1 beträgt.

**17.** Verwendung einer Tensidmischung gemäß einem der Ansprüche 1 bis 16, **dadurch gekennzeichnet, dass** man die Tensidmischung in Gegenwart von Formationswässern einsetzt, welche mehr als 150 g/l gelöster Salze enthalten.

**18.** Verwendung einer Tensidmischung gemäß einem der Ansprüche 1 bis 16, **dadurch gekennzeichnet, dass** man die Tensidmischung in Gegenwart von Formationswässern einsetzt, welche mehr als 10 g/l Erdalkaliionen enthalten.

**19.** Verwendung einer Tensidmischung gemäß einem der Ansprüche 1 bis 16, **dadurch gekennzeichnet, dass** man die Tensidmischung in Gegenwart von Formationswässern einsetzt, welche mehr als 30 g/l Erdalkaliionen enthalten.

## Claims

**1.** The use of a surfactant mixture for tertiary mineral oil production in a process for surfactant flooding, by injecting a surfactant formulation through at least one injection well into a mineral oil deposit, thus lowering the interfacial tension between mineral oil and aqueous phase, and removing crude oil from the deposit through at least one production well, said surfactant mixture comprising at least the following surfactants:

(A) from 50 to 99% by weight of at least one surfactant (A) of the general formula $R^1$-X where $R^1$ is a hydrocarbon radical having from 12 to 30 carbon atoms and X is an anionic or nonionic hydrophilic group, and
(B) from 1 to 50% by weight of at least one cosurfactant (B),

where the amounts stated are based in each case on the total amount of all surfactants in the mixture, wherein the cosurfactant (B) has the general formula $R^2-O-(R^3-O)_n-R^4$ (I) and where the $R^2$, $R^3$ and $R^4$ radicals and the number n are each defined as follows:

n is from 2 to 20,

$R^2$ is a branched hydrocarbon radical which has from 6 to 11 carbon atoms and an average degree of branching of from 1 to 2.5, selected from the group of

$R^{2a}$ saturated, aliphatic hydrocarbon radicals, or

$R^{2b}$ phenyl or $R^6$-phenyl, where $R^6$ is an alkyl radical having from 1 to 5 carbon atoms,

$R^{2c}$ phenyl-substituted hydrocarbon radicals of the general formula phenyl-$R^7$ where $R^7$ is a divalent hydrocarbon radical having from 1 to 5 carbon atoms,

$R^3$ are each independently an ethylene group or a propylene group, with the proviso that the ethylene and propylene groups - where both types of groups are present - may be arranged randomly, alternately or in block structure,

$R^4$ is hydrogen or a group selected from the group of $-SO_3H$, $-PO_3H_2$, $-R^5-COOH$, $-R^5-SO_3H$ or $-R^5-PO_3H_2$ or salts thereof, where $R^5$ is a divalent hydrocarbon group having from 1 to 4 carbon atoms,

with the proviso that the amount of surfactants (A) and cosurfactants (B) together is at least 50% by weight based on the amount of all surfactants in the mixture.

2. The use according to claim 1, wherein the surfactants form a microemulsion with the water phase and the oil phase.

3. The use according to claim 1 or 2, wherein the injection of the surfactant formulation is followed by injection of water or a relatively high-viscosity aqueous solution of a thickening polymer to maintain the pressure.

4. The use of a surfactant mixture according to any one of claims 1 to 3, wherein X is a sulfonic acid group $-SO_3H$ or a salt thereof.

5. The use of a surfactant mixture according to any one of claims 1 to 4, wherein n is from 6 to 15.

6. The use of a surfactant mixture according to any one of claims 1 to 5, wherein at most 2 of the n $R^3$ radicals are a propylene group.

7. The use of a surfactant mixture according to any one of claims 1 to 6, wherein all n $R^3$ radicals are ethylene groups.

8. The use of a surfactant mixture according to any one of claims 1 to 7, which comprises an $R^{2a}$ radical having a mean degree of branching of from 1 to 1.5.

9. The use of a surfactant mixture according to any one of claims 1 to 7, which comprises an $R^{2a}$ radical having an average of from 8 to 10 carbon atoms.

10. The use of a surfactant mixture according to any one of claims 1 to 7, which comprises an $R^{2a}$ radical having an average of from 9.5 to 10.5 carbon atoms.

11. The use of a surfactant mixture according to any one of claims 1 to 7, which comprises an $R^{2a}$ radical which derives from a Guerbet alcohol and in which at least 65 mol% have the general formula (II)

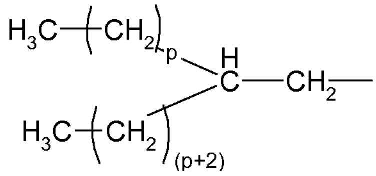

(II)

where p is 0, 1 or 2.

12. The use of a surfactant mixture according to any one of claims 1 to 7, which comprises an $R^{2b}$ radical selected from the group of phenyl, 2-methyl-1-phenyl, 3-methyl-1-phenyl, 4-methyl-1-phenyl, 2-ethyl-1-phenyl, 3-ethyl-1-phenyl or 4-ethyl-1-phenyl.

13. The use of a surfactant mixture according to any one of claims 1 to 12, wherein $R^4$ is $-R^5-SO_3H$ or a salt thereof.

**14.** The use of a surfactant mixture according to any one of claims 1 to 12, wherein $R^4$ is hydrogen.

**15.** The use of a surfactant mixture according to any one of claims 1 to 12, wherein $R^4$ is $-PO_3H_2$ or a salt thereof.

**16.** The use of a surfactant mixture according to any one of claims 1 to 15, wherein the weight ratio of surfactants (A) to cosurfactants (B) is at least 2:1.

**17.** The use of a surfactant mixture according to any one of claims 1 to 16, wherein the surfactant mixture is used in the presence of formation water which comprises more than 150 g/l of dissolved salts.

**18.** The use of a surfactant mixture according to any one of claims 1 to 16, wherein the surfactant mixture is used in the presence of formation water which comprises more than 10 g/l of alkaline earth metal ions.

**19.** The use of a surfactant mixture according to any one of claims 1 to 16, wherein the surfactant mixture is used in the presence of formation water which comprises more than 30 g/l of alkaline earth metal ions.

**Revendications**

**1.** Utilisation d'un mélange d'agents tensioactifs pour l'extraction tertiaire de pétrole, où il s'agit d'un procédé par injection d'agents tensioactifs, en ce qu'on injecte sous pression une formulation d'agents tensioactifs via au moins un trou d'injection dans un gisement pétrolier, diminue ainsi la tension interfaciale entre le pétrole et la phase aqueuse et prélève le pétrole brut du gisement via au moins un trou de production, le mélange d'agents tensioactifs comprenant au moins les agents tensioactifs suivants :

(A) 50 à 99% en poids d'au moins un agent tensioactif (A) de formule générale $R^1$-X, où il s'agit, pour $R^1$, d'un radical hydrocarboné comprenant 12 à 30 atomes de carbone et, pour X, d'un groupe hydrophile anionique ou non ionique, ainsi que
(B) 1 à 50% en poids d'au moins un co-agent tensioactif (B),

les indications de quantité se rapportant à chaque fois à la quantité totale de tous les agents tensioactifs dans le mélange, **caractérisée en ce que** le co-agent tensioactif (B) présente la formule générale $R^2-O-(R^3-O)_n-R^4$ (I), où les radicaux $R^2$ $R^3$ et $R^4$ ainsi que le nombre n présentent la signification suivante :

n un nombre de 2 à 20,
$R^2$ un radical hydrocarboné ramifié comprenant 6 à 11 atomes de carbone, qui présente un degré de ramification moyen de 1 à 2,5, choisi dans le groupe constitué par
$R^{2a}$ les radicaux hydrocarbonés aliphatiques saturés, ou
$R^{2b}$ phényle ou $R^6$-phényl-, où il s'agit, pour $R^6$, d'un radical alkyle comprenant 1 à 5 atomes de carbone,
$R^{2c}$ les radicaux hydrocarbonés substitués par phényle de formule générale phényl-$R^7$-, où il s'agit, pour $R^7$, d'un radical hydrocarboné divalent comprenant 1 à 5 atomes de carbone,
$R^3$ indépendamment les uns des autres, un groupe éthylène ou propylène, à condition que les groupes éthylène et propylène, pour autant que les deux types de groupes soient présents, puissent être disposés de manière statistique, séquencée ou en structure à blocs,
$R^4$ hydrogène ou un groupe choisi dans le groupe formé par $-SO_3H$, $-PO_3H_2$, $-R^5-COOH$, $-R^5-SO_3H$ ou $-R^5-PO_3H_2$ ou leurs sels, où il s'agit, pour $R^5$, d'un groupe hydrocarboné divalent comprenant 1 à 4 atomes de carbone,

à condition que la quantité d'agents tensioactifs (A) et de co-agents tensioactifs (B) ensemble représente au moins 50% en poids par rapport à la quantité de tous les agents tensioactifs dans le mélange.

**2.** Utilisation selon la revendication 1, **caractérisée en ce que** les agents tensioactifs forment une microémulsion avec la phase aqueuse et la phase huileuse.

**3.** Utilisation selon la revendication 1 ou 2, **caractérisée en ce qu'**on injecte, après l'injection sous pression de la formulation d'agents tensioactifs, en vue de maintenir la pression, de l'eau ou une solution aqueuse plus visqueuse d'un polymère à effet épaississant.

**4.** Utilisation d'un mélange d'agents tensioactifs selon l'une quelconque des revendications 1 à 3, **caractérisée en ce qu'**il s'agit, pour X, d'un groupe acide sulfonique $-SO_3H$ ou d'un sel de celui-ci.

**5.** Utilisation d'un mélange d'agents tensioactifs selon l'une quelconque des revendications 1 à 4, **caractérisée en ce que** n représente un nombre de 6 à 15.

**6.** Utilisation d'un mélange d'agents tensioactifs selon l'une quelconque des revendications 1 à 5, **caractérisée en ce qu'**il s'agit, pour au maximum 2 des n radicaux $R^3$, d'un groupe de propylène.

**7.** Utilisation d'un mélange d'agents tensioactifs selon l'une quelconque des revendications 1 à 6, **caractérisée en ce qu'**il s'agit, pour tous les n radicaux $R^3$, de groupes d'éthylène.

**8.** Utilisation d'un mélange d'agents tensioactifs selon l'une quelconque des revendications 1 à 7, **caractérisée en ce qu'**il s'agit d'un radical $R^{2a}$ présentant un degré de ramification moyen de 1 à 1,5.

**9.** Utilisation d'un mélange d'agents tensioactifs selon l'une quelconque des revendications 1 à 7, **caractérisée en ce qu'**il s'agit d'un radical $R^{2a}$ présentant en moyenne 8 à 10 atomes de carbone.

**10.** Utilisation d'un mélange d'agents tensioactifs selon l'une quelconque des revendications 1 à 7, **caractérisée en ce qu'**il s'agit d'un radical $R^{2a}$ présentant en moyenne 9,5 à 10,5 atomes de carbone.

**11.** Utilisation d'un mélange d'agents tensioactifs selon l'une quelconque des revendications 1 à 7, **caractérisée en ce qu'**il s'agit d'un radical $R^{2a}$ qui est dérivé d'un alcool de Guerbet et pour lequel au moins 65% en mole présentent la formule générale (II)

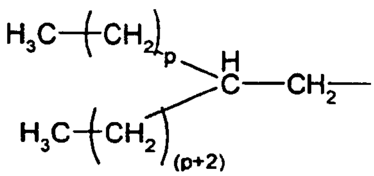

(II)

où p vaut 0, 1 ou 2.

**12.** Utilisation d'un mélange d'agents tensioactifs selon l'une quelconque des revendications 1 à 7, **caractérisée en ce qu'**il s'agit d'un radical $R^{2b}$ choisi dans le groupe formé par les radicaux phényle, 2-méthyl-1-phényle, 3-méthyl-1-phényle, 4-méthyl-1-phényle, 2-éthyl-1-phényle, 3-éthyl-1-phényle ou 4-éthyl-1-phényle.

**13.** Utilisation d'un mélange d'agents tensioactifs selon l'une quelconque des revendications 1 à 12, **caractérisée en ce qu'**il s'agit, pour $R^4$, de $-R^5-SO_3H$ ou d'un sel de celui-ci.

**14.** Utilisation d'un mélange d'agents tensioactifs selon l'une quelconque des revendications 1 à 12, **caractérisée en ce qu'**il s'agit, pour $R^4$, d'hydrogène.

**15.** Utilisation d'un mélange d'agents tensioactifs selon l'une quelconque des revendications 1 à 12, **caractérisée en ce qu'**il s'agit, pour $R^4$, de $-PO_3H_2$ ou d'un sel de celui-ci.

**16.** Utilisation d'un mélange d'agents tensioactifs selon l'une quelconque des revendications 1 à 15, **caractérisée en ce que** le rapport pondéral des agents tensioactifs (A) aux co-agents tensioactifs (B) vaut au moins 2:1.

**17.** Utilisation d'un mélange d'agents tensioactifs selon l'une quelconque des revendications 1 à 16, **caractérisée en ce qu'**on utilise le mélange d'agents tensioactifs en présence d'eaux de formation qui contiennent plus de 150 g/l de sels dissous.

**18.** Utilisation d'un mélange d'agents tensioactifs selon l'une quelconque des revendications 1 à 16, **caractérisée en ce qu'**on utilise le mélange d'agents tensioactifs en présence d'eaux de formation qui contiennent plus de 10 g/l d'ions de métal alcalinoterreux.

**19.** Utilisation d'un mélange d'agents tensioactifs selon l'une quelconque des revendications 1 à 16, **caractérisée en ce qu'**on utilise le mélange d'agents tensioactifs en présence d'eaux de formation qui contiennent plus de 30 g/l d'ions de métal alcalinoterreux.

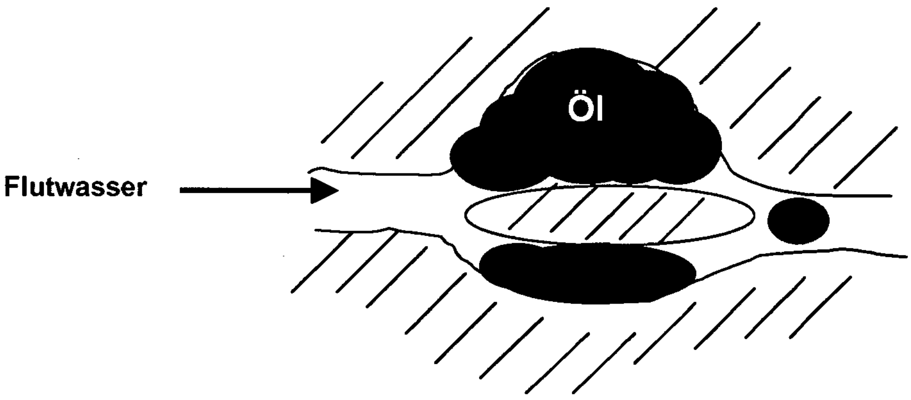


Fig. 1

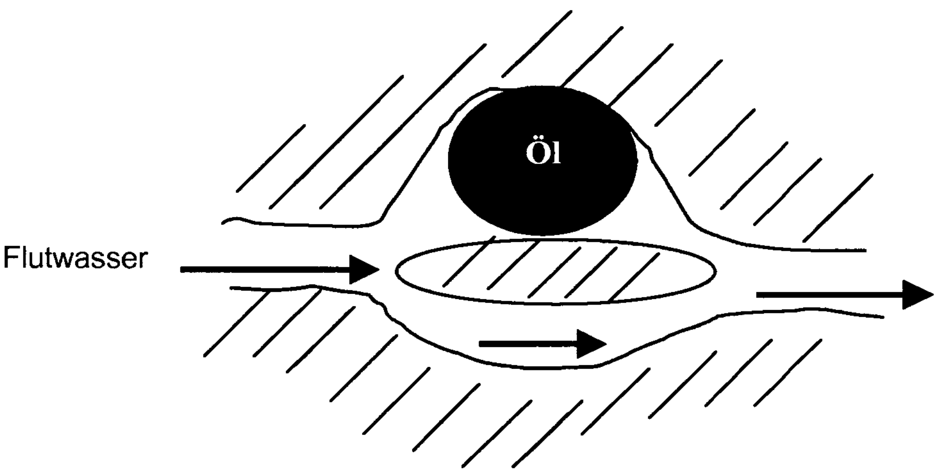


Fig. 2

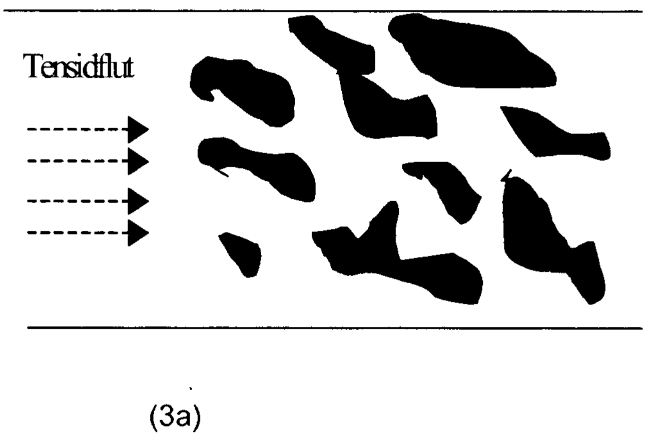


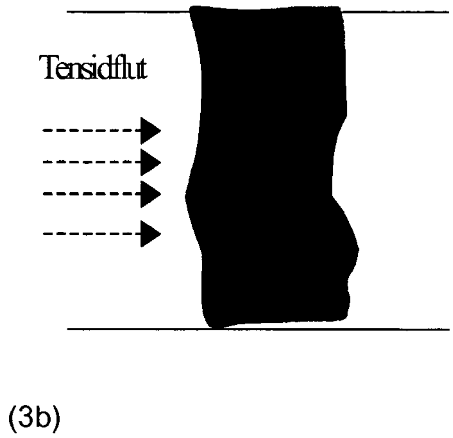


Fig. 3

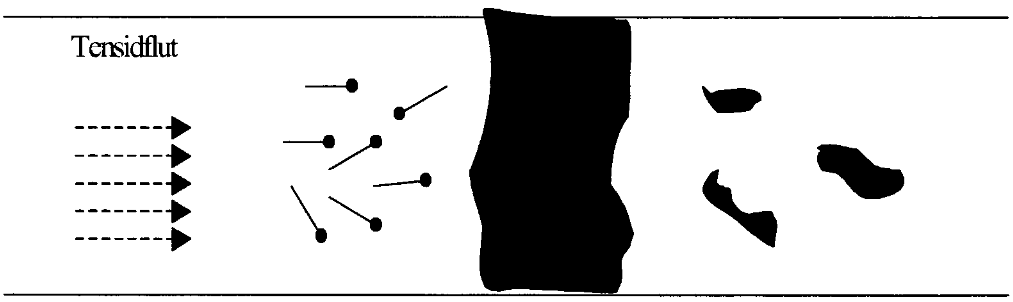


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3811504 A
- US 3811505 A
- US 3811507 A
- US 3890239 A
- US 4463806 A
- US 20060185845 A1
- US 2006018486 A
- DE 4325237 A1
- DE 10243361 A1
- EP 311961 A1
- WO 2006131541 A
- DE 4339713 A


### In der Beschreibung aufgeführte Nicht-Patentliteratur


- *Journal of Petroleum Science and Engineering,* 1998, vol. 19, 265-280
- **C. MELROSE ; C.F. BRANDNER.** *J. Canadian Petr. Techn.,* Oktober 1974, vol. 58
- **D. B. LEVITT ; A. C. JACKSON ; L. BRITTON ; G.A. POPE.** Identification and Evaluation of High-Performance EOR Surfactants. *SPE 100089, Konferenzbeitrag für das SPE Symposium on Improved Oil Recovery Annual Meeting,* 24. April 2006
- Ullmann's Encyclopedia of Industrial Chemistry. Electronic Release. Wiley-VCH, 2008, 10
- **T. LAUE ; A. PLAGENS.** *Namens- und Schlagwort-Reaktionen der organischen Chemie,* 1998, 16ff
- **C. HUH.** *J. Coll. Interf. Sc.,* 1979, vol. 71